(19)

Europäisches
Patentamt
European
Patent Office
Office européen
des brevets

(11)  **EP 4 343 678 B1**

(12)　　　　　　　**EUROPEAN PATENT SPECIFICATION**

(45) Date of publication and mention
of the grant of the patent:
**06.05.2026  Bulletin 2026/19**

(21) Application number: **23196232.5**

(22) Date of filing: **08.09.2023**

(51) International Patent Classification (IPC):
***G06T 3/4015*** (2024.01)　　　***G06T 3/4053*** (2024.01)
***H04N 23/951*** (2023.01)

(52) Cooperative Patent Classification (CPC):
**G06T 3/4015; G06T 3/4053; H04N 23/951**

(54) **METHOD AND APPARATUS FOR PROCESSING ARRAY IMAGE**

VERFAHREN UND VORRICHTUNG ZUR VERARBEITUNG EINES ARRAYBILDES

PROCÉDÉ ET APPAREIL DE TRAITEMENT D'IMAGE DE RÉSEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.09.2022  KR 20220120004**

(43) Date of publication of application:
**27.03.2024  Bulletin 2024/13**

(73) Proprietor: **Samsung Electronics Co., Ltd.**
**Suwon-si, Gyeonggi-do 16677 (KR)**

(72) Inventors:
• **Heo, Jingu**
**16678 Suwon-si, Gyeonggi-do (KR)**
• **Kang, Byong Min**
**16678 Suwon-si, Gyeonggi-do (KR)**
• **Nam, Dong Kyung**
**16678 Suwon-si, Gyeonggi-do (KR)**
• **Cho, Yang Ho**
**16678 Suwon-si, Gyeonggi-do (KR)**

(74) Representative: **Grünecker Patent- und
Rechtsanwälte
PartG mbB
Leopoldstraße 4
80802 München (DE)**

(56) References cited:
**EP-A1- 4 050 553        WO-A2-2008/086037
US-A1- 2014 055 632**

**Description**

BACKGROUND

**1. Field**

The disclosure relates to a method and apparatus for processing an array image.

**2. Description of Related Art**

Due to the development of optical technology and image processing technology, capturing devices are utilized in a wide range of fields such as multimedia content, security, and recognition. For example, a capturing device may be mounted on a mobile device, a camera, a vehicle, or a computer to capture an image, recognize an object, or obtain data for controlling a device. The volume of the capturing device may be determined based on the size of a lens, the focal length of the lens, and the size of a sensor. When the volume of the capturing device is limited, a long focal length may be provided in a limited space by transforming a lens structure.

EP 4 050 553 A1 refers to a method and device for restoring image obtained from array camera. The image restoration method includes obtaining a plurality of images through lens elements included in the array camera, obtaining a global parameter of the plurality of images, generating first processed images by transforming a viewpoint of each of the plurality of images based on the obtained global parameter, obtaining a local parameter for each pixel corresponding to each of the first processed images, generating second processed images by transforming the first processed images based on the obtained local parameter, and generating a synthesized image of a target viewpoint based on synthesizing the second processed images.

WO 2008/086037 A2 refers to a color filter array interpolation. A CFA demosaicing algorithm utilizes constant color difference rule to determine green, red and blue Bayer planes. Several high-level green plane interpolation algorithms are discussed, and a green plane interpolation algorithm utilizes inverse gradient weighted estimate. As an alternative, the green plane interpolation algorithms combine horizontal and vertical gradient estimates with the gradients computed as weights. Also disclosed is a one-dimensional transform-based green updating algorithm, which provides directional interpolation, thereby reducing effect of zipper artifacts in the demosaiced image.

US 2014/055632 A1 refers to a feature based high resolution motion estimation from low resolution images captured using an array source. Systems and methods enable feature based high resolution motion estimation from low resolution images captured using an array camera. The method also includes synthesizing high resolution image portions, where the synthesized high resolution image portions contain identified plurality of detected features from a sequence of low resolution images.

SUMMARY

The invention is claimed in the independent claims. Preferred embodiments are specified in the dependent claims.

According to one aspect of the present invention, there is provided an image processing method comprising: receiving a plurality of sub images from an input array image generated through an array lens, each of the plurality of sub images corresponding to different views; generating a plurality of temporary restored images generated by demosaicing the plurality of sub images based on gradients surrounding a pixel position for which a pixel value needs to be determined; determining matching information based on an optical flow representing a difference between corresponding pixel locations based on a view difference between pixels of the plurality of sub images using a neural network model; the neural network model being pre-trained to estimate the optical flow including the matching information in response to an input of input data based on a view difference between the sub images; performing a pixel-to-pixel matching based on the matching information and providing a pixel distance representing a distance between pixels of matching pairs of the sub images, and comparing the pixel distance with a threshold; when the pixel distance of a matching pair is greater than the threshold, extracting the matching pair as one or more refinement targets; generating refined matching information by replacing at least one of pixels in the extracted one or more refinement targets based on a local search for geometric consistency refinement for the refinement targets of a region based on pixel locations of the one or more refinement targets; and generating an output image of a single view by merging the plurality of temporary restored images based on the refined matching information.

According to another aspect of the present invention, there is provided an image processing apparatus comprising: a memory configured to store instructions; and a processor configured to execute the one or more instructions to: receive a plurality of sub images from an input array image generated through an array lens, each of the plurality of sub images corresponding to different views; generate a plurality of temporary restored images generated by demosaicing the

**EP 4 343 678 B1**

plurality of sub images based on gradients surrounding a pixel position for which a pixel value needs to be determined; determine matching information based on an optical flow representing a difference between corresponding pixel locations based on a view difference between pixels of the plurality of sub images using a neural network model; the neural network model being pre-trained to estimate the optical flow including the matching information in response to an input of input data based on a view difference between the sub images; perform a pixel-to-pixel matching based on the matching information and provide a pixel distance representing a distance between pixels of matching pairs of the sub images, and compare the pixel distance with a threshold; when the pixel distance of a matching pair is greater than the threshold, extract the matching pair as one or more refinement targets; generate refined matching information by replacing at least one of pixels in the extracted one or more refinement targets based on a local search for geometric consistency refinement for the refinement targets of a region based on pixel locations of the one or more refinement targets; and generate an output image of a single view by merging the plurality of temporary restored images based on the refined matching information.

According to a further aspect of the present invention, there is provided a computer-readable storage medium storing instructions that, when executed by a processor of an electronic device comprising an imaging device configured to generate an input array image having a plurality of sub images, each of the plurality of sub images corresponding to different views, instruct the processor to: generate a plurality of temporary restored images generated by demosaicing the plurality of sub images based on gradients surrounding a pixel position for which a pixel value needs to be determined; determine matching information based on an optical flow representing a difference between corresponding pixel locations based on a view difference between pixels of the plurality of sub images using a neural network model; the neural network model being pre-trained to estimate the optical flow including the matching information in response to an input of input data based on a view difference between the sub images; perform a pixel-to-pixel matching based on the matching information and provide a pixel distance representing a distance between pixels of matching pairs of the sub images, and compare the pixel distance with a threshold; when the pixel distance of a matching pair is greater than the threshold, extract the matching pair as one or more refinement targets; generate refined matching information by replacing at least one of pixels in the extracted one or more refinement targets based on a local search for geometric consistency refinement for the refinement targets of a region based on pixel locations of the one or more refinement targets; and generate an output image of a single view by merging the plurality of temporary restored images based on the refined matching information.

Other features and aspects will be apparent from the following detailed description, the drawings, and the claims.

BRIEF DESCRIPTION OF THE DRAWINGS

FIG. 1A illustrates an example of configurations and operations of an imaging device and an image processing apparatus, according to one or more example embodiments.

FIG. 1B illustrates an example of a configuration of the imaging device, according to one or more example embodiments.

FIG. 2 illustrates an example of pixels of an input array image, according to one or more example embodiments.

FIG. 3 illustrates an example of a change in pixel data from raw data to an output image, according to one or more example embodiments.

FIG. 4A illustrates an example of a demosaicing operation based on region of interest (ROI) detection, according to one or more example embodiments.

FIG. 4B illustrates an example of an operation of determining a gradient value, according to one or more example embodiments.

FIG. 5 illustrates an example of an upsampling operation based on edge information, according to one or more example embodiments.

FIG. 6 illustrates an example of a change in pixel data during upsampling, according to one or more example embodiments.

FIG. 7 illustrates an example of a sharpening operation according to one or more example embodiments.

FIG. 8 illustrates an example of a matching information refinement operation using an optical flow, according to one or more example embodiments.

FIG. 9 illustrates an example of a pixel merging operation based on matching information, according to one or more example embodiments.

FIG. 10 illustrates an example of a changing process of an original copy of a G channel, according to one or more example embodiments.

FIG. 11 illustrates an example of an array image processing process according to one or more example embodiments.

FIG. 12 illustrates an example of a configuration of an image processing apparatus according to one or more example embodiments.

FIG. 13 illustrates an example of a configuration of an electronic device according to one or more example embodiments.

FIG. 14 illustrates an example of an image processing method according to one or more example embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed structural or functional description is provided as an example only and various alterations and modifications may be made to the examples.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, "at least one of A and B", "at least one of A, B, or C," and the like, each of which may include any one of the items listed together in the corresponding one of the phrases, or all possible combinations thereof.

Unless otherwise defined, all terms used herein including technical or scientific terms have the same meaning as commonly understood by one of ordinary skill in the art to which examples belong. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, examples will be described in detail with reference to the accompanying drawings. When describing the examples with reference to the accompanying drawings, like reference numerals refer to like components and a repeated description related thereto will be omitted.

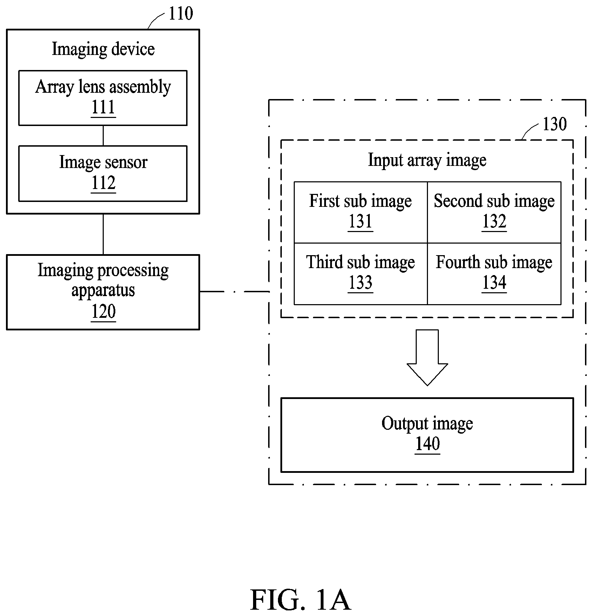

FIG. 1A illustrates configurations and operations of an imaging device and an image processing apparatus, according to one or more example embodiments. Referring to FIG. 1A, an imaging device 110 may include an array lens assembly 111 and an image sensor 112. The array lens assembly 111 may include a layer of at least one lens array. Each layer may include a lens array including a plurality of individual lenses. For example, a lens array may include individual lenses arranged in an array. For example, the lens array may include individual lenses arranged in a 2*2 array or a 3*3 array. However, the disclosure is not limited to a 2*2 array or a 3*3 array, and as such, according to another example embodiment, the lens array may have a different configuration. Each layer may include the same lens arrangement.

The image sensor 112 may be a single image sensor or multiple image sensors provided in a number corresponding to the lens arrangement. The image sensor 112 may generate an input array image 130. The input array image 130 may include a first sub image 131, a second sub image 132, a third sub image 133 and a fourth sub image 134 based on the lens arrangement of the array lens assembly 111. The first sub image 131, the second sub image 132, the third sub image 133 and the fourth sub image 134 in a 2*2 arrangement are based on an assumption that the array lens assembly 111 has a 2*2 lens arrangement. Hereinafter, an example of the array lens assembly 111 in the 2*2 lens arrangement is described. However, the lens arrangement of the array lens assembly 111 is not limited to 2*2.

The image processing apparatus 120 may generate an output image 140 by merging the first sub image 131, the second sub image 132, the third sub image 133 and the fourth sub image 134. The output image 140 may have higher image quality than each of the first sub image 131, the second sub image 132, the third sub image 133 and the fourth sub image 134. For example, the output image 140 may have 4 times the image resolution of each of the first sub image 131, the second sub image 132, the third sub image 133 and the fourth sub image 134. The image processing apparatus 120 may maximize the resolution of the output image 140 by optimizing individual processing of the first sub image 131, the second sub image 132, the third sub image 133 and the fourth sub image 134 and/or optimizing merging processing of the first sub image 131, the second sub image 132, the third sub image 133 and the fourth sub image 134.

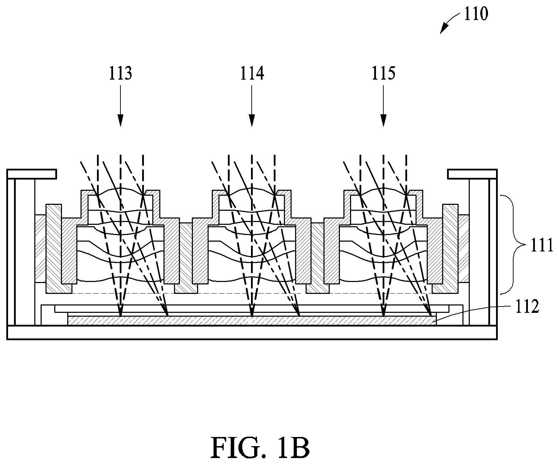

FIG. 1B illustrates an example of a configuration of the imaging device, according to one or more example embodiments. Referring to FIG. 1B, the imaging device 110 may include the array lens assembly 111 and the image sensor 112. The imaging device 110 may include a plurality of apertures. For example, the imaging device 110 may include a first aperture 113, a second aperture 114 and a third aperture 115. However, the disclosure is not limited thereto, and as such, according to another example embodiment, the imaging device 110 may include more than three apertures or less than three apertures. The imaging device 110 may generate sub images based on the arrangement of the plurality of apertures 113 to 115. FIG. 1B illustrates an example of a lens arrangement in a 3*3 array type. In this example, 3*3 sub images may be obtained. However, 3*3 is merely an example, and a different array type, such as 2*2, may be used. The imaging device 110 may correspond to an array lens device. An array lens technique is a technique for obtaining a plurality of small images having the same angle of view using a camera including a plurality of lenses having a short focal length. The thickness of a camera module may decrease through the array lens technique.

An array lens may be used in various technical fields. The array lens may reduce the size of a camera by dividing a large sensor and a large lens for a large sensor into an array type. For example, when the length (in other words, the height) of a first camera is L based on an assumption that an angle of view is A, a focal length is f, and an image size is D, the length of a second camera based on an assumption that an angle of view is A, a focal length is f/2, and the image size is D/2 may decrease to L/2. The resolution of the second camera may decrease to 1/4 compared to the first camera. When the second camera is configured by a 2*2 lens array and one output image is generated, the resolution may be the same as the first camera. More specifically, 4 sub images may be generated by the 2*2 lens array and an image having the same resolution as the first camera may be derived by synthesizing the four sub images.

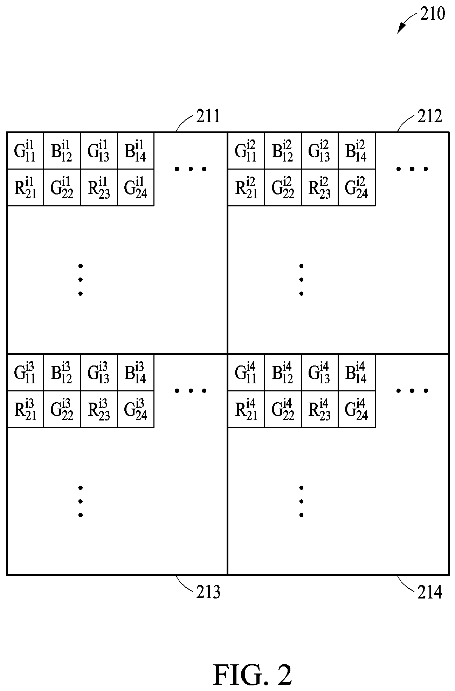

FIG. 2 illustrates an example of pixels of an input array image, according to one or more example embodiments. Referring to FIG. 2, an input array image 210 may include a first sub image 211, a second sub image 212, a third sub image 213 and a fourth sub image 214. The input array image 210 may include a red (R) channel signal, a green (G) channel signal, and a blue (B) channel signal. A color filter array (CFA) may be between a lens and an image sensor and a signal of each channel may be divided through the CFA. Each of the first sub image 211, the second sub image 212, the third sub image 213 and the fourth sub image 214 of the input array image 210 may include image data in a pattern (e.g., a 2*2 array pattern) corresponding to a pattern of the CFA (e.g., a 2*2 array pattern). Hereinafter, an example that the CFA includes a Bayer pattern is described, however, different patterns other than the Bayer pattern may be used. In this example, the input array image 210 may include image data based on an R-G-G-B 2*2 Bayer pattern. As illustrated in FIG. 2, a pixel of each channel may be represented by $R_{mn}^{ik}$, $G_{mn}^{ik}$, and $B_{mn}^{ik}$. Here, k may denote an identifier of a sub image where each pixel belongs to and m and n may denote an identifier of a location in a sub image where each pixel belongs to. Data including an R channel signal, a G channel signal, and a B channel signal, such as the input array image 210, may be referred to as raw data. Each channel signal of the raw data may be separated from another and may constitute individual channel data, such as R channel data, G channel data, and B channel data. In each individual channel data, a different channel pixel may be filled through demosaicing.

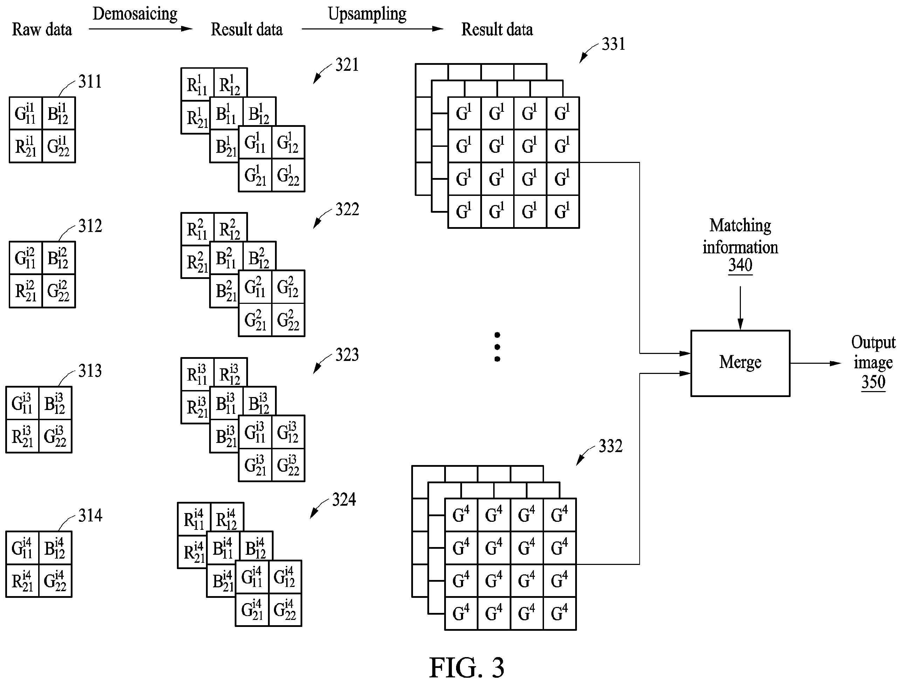

FIG. 3 illustrates an example of a change in pixel data from raw data to an output image, according to one or more example embodiments. Referring to FIG. 3, result data 321 to 324 may be determined through demosaicing each individual piece of channel data of raw data 311 to 314. For example, first result data 321 may be determined through demosaicing individual piece of channel data of first raw data 311, second result data 322 may be determined through demosaicing individual piece of channel data of first raw data 312, third result data 323 may be determined through demosaicing individual piece of channel data of first raw data 313 and fourth result data 324 may be determined through demosaicing individual piece of channel data of first raw data 314. As representatives of the raw data 311 to 314, four pixels of each sub image are illustrated in FIG. 3. Each pixel of the raw data 311 to 314 may be represented by $R_{mn}^{ik}$, $G_{mn}^{ik}$, and $B_{mn}^{ik}$. k may denote an identifier of a sub image where each pixel belongs to and m and n may denote an identifier of a location in a sub image where each pixel belongs to.

The raw data 311 to 314 may be divided into individual pieces of channel data and a different channel pixel of each of the individual piece of channel data may be filled by interpolation based on demosaicing. Although a detailed description is provided below, based on demosaicing of the examples, pixels in which a G channel signal is dominant may be classified into a region of interest (ROI) and different interpolations may apply to an ROI and a region of non-interest (RONI). Through such interpolation on the ROI, the resolution of a special region, such as a moire region, may enhance. The result data 321 to 324 may be constituted by each individual piece of channel data and may correspond to an RGB full color image. A pixel of R channel data, a pixel of G channel data, and a pixel of B channel data may be represented by $R_{mn}^{k}$, $G_{mn}^{k}$, and $B_{mn}^{k}$, respectively. Here, k may denote an identifier of a sub image and m and n may denote an identifier of a location in individual piece of channel data where each pixel belongs to.

According to an example embodiment, upsampled result data may be determined through upsampling the result data 321 to 324 of demosaicing. FIG. 3 illustrates that first upsampled result data 331 may be determined through upsampling the result data 321 of a first sub image and fourth upsampled result data 332 may be determined through upsampling the result data 324 of a fourth sub image. However, the disclosure is not limited thereto, and as such, second upsampled result data of a second sub image and third upsampled result data of a third sub image may be further determined using result data 322 and result data 323. The resolution may be enhanced through upsampling. The degree of enhancement may be determined based on the number of sub images included in an input array image. For example, when the input array image includes 2*2 sub images, the resolution of the result data 331 and 332 may be four times of the result data 321 to 324.

Although a detailed description is provided below, upsampling of the examples may be performed based on edge information generated during demosaicing. Through this process, unnecessary redundant operations may be removed and an edge portion may be restored with high resolution. Pixels of the result data 331 and 332 may be represented by $G^k$, $R^k$, and $B^k$. Although a location identifier is omitted in FIG. 3 for convenience, location identifiers m and n may be added, such as the raw data 311 to 314 and the result data 321 to 324. According to an example embodiment, sharpening may be additionally performed after upsampling.

The first upsampled result data 331 and the second upsampled result data 332 may have higher resolution than the result data 321 to 324. However, the first upsampled result data 331 and the second upsampled result data 332 may include an artifact due to lack of information suitable for the enhanced resolution. The sub images may correspond to different views and sharpness suitable for the enhanced resolution may be achieved as the first upsampled result data 331 and the second upsampled result data 332 based on the sub images is merged based on matching information 340. In this aspect, the first upsampled result data 331 and the second upsampled result data 332 may be referred to as a temporary restored image and an output image 350 may be referred to as a final restored image.

Although a detailed description is provided below, the matching information 340 may be determined based on an optical flow. The optical flow may be determined by using a neural network model and may include the matching information 340 based on a view difference of the sub images of pixels in the sub images. The optical flow may represent a difference between pixel locations based on a view difference rather than a difference between pixel locations based on a movement over time. The matching information 340 may represent a matching pair of the sub images. For example, when a same point in the real world is captured as a first pixel of a first sub image and a second pixel of a second sub image, the matching information 340 may include the first pixel and the second pixel as a matching pair. Although an example that one matching pair matches pixels of two sub images is described below, one matching pair may be defined to match pixels of three sub images or four sub images. The neural network model may be pretrained to output an optical flow including the matching information 340 in response to an input of input data based on the sub images.

Through the matching information 340, the first upsampled result data 331 based on the sub images corresponding to different views may be merged into the output image 350 corresponding to a single view. The resolutions of the sub images may be enhanced by upsampling and the matching information 340 may represent a matching relationship between pixels based on the enhanced resolution. The resolutions of the sub images may be referred to as a low resolution and an upsampling result may be referred to as a high resolution. In this example, the neural network model may be trained to estimate an optical flow of high-resolution output data based on high-resolution input data, may be trained to estimate an optical flow of high-resolution output data based on low-resolution input data, or may be trained to estimate an optical flow of low-resolution output data based on low-resolution input data. According to an example embodiment, the optical flow of low-resolution output data may be converted into high resolution through a resolution enhancement operation, such as upsampling.

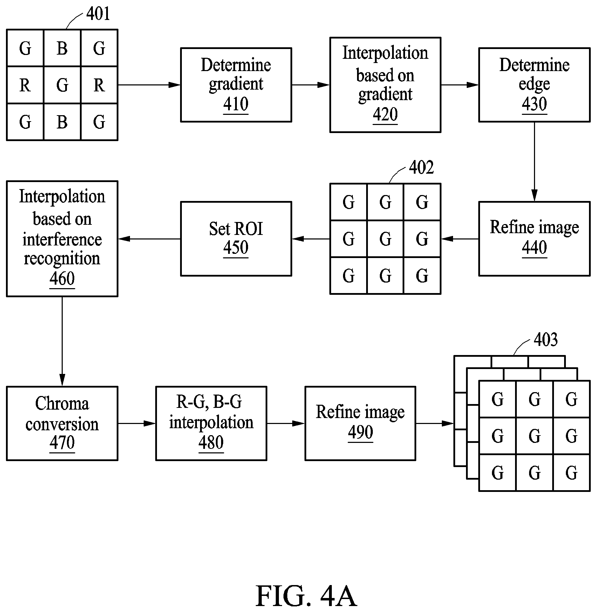

FIG. 4A illustrates an example of a demosaicing operation based on ROI detection, according to one or more example embodiments. Referring to FIG. 4A, temporary G channel data 402 may be determined based on raw data 401 through operations 410 to 440. In operation 410, a gradient may be determined based on the raw data 401. For example, G channel pixels may be extracted from the raw data 401 and for an empty space between the G channel pixels , a gradient in the vertical direction and a gradient in the horizontal direction may be determined. Here, the empty spaces between the G channel pixels may be a space where R channel pixels and B channel pixels exist in the raw data 401.

In operation 420, gradient-based interpolation may be performed. Interpolation may be performed in a smaller direction of the gradient in the vertical direction and the gradient in the horizontal direction. A gradient value in each direction and an interpolation value of a target pixel may be calculated in various ways. For example, when values of 3*3 grid cells are defined as $C_{11}$ to $C_{33}$, a gradient value V in the vertical direction of $C_{22}$ may be determined through $C_{12}$ to $C_{32}$ and a gradient value H in the horizontal direction of $C_{22}$ may be determined through $C_{21}$ to $C_{23}$. When V is greater than H, it may be determined that $C_{22}=H/2$. When V is less than H, it may be determined that $C_{22}=V/2$. However, various interpolation methods may exist.

In operation 430, edge information may be determined and in operation 440, image refinement may be performed. Operations 430 and 440 may apply to G channel data and the temporary G channel data 402 may be determined through operations 430 and 440. The edge information may include the gradient value and a Laplacian value. The gradient value may be a primary derivative value determined based on a neighboring pixel value of operation 420 and the Laplacian value may be a secondary derivative value determined based on a neighboring pixel value of a neighboring pixel. Since there is no original G channel information in a space two pixels apart from a space between the original G channel pixels (in other words, a space where the R channel pixels and the B channel pixels exist in the raw data 401), R channel information or B channel information may be used as the original G channel information when obtaining the Laplacian value. For example, image refinement may include interpolation in a diagonal direction using edge information in the diagonal direction. In this example, interpolation may represent refinement through interpolation.

When the temporary G channel data 402 is determined, final color data 403 may be determined through operations 450 to 490. The final color data 403 may include final R channel data, final G channel data, and final B channel data.

In operation 450, an ROI may be set. The ROI may be set in the temporary G channel data 402. The ROI may include an interference region where an artifact may highly occur, such as a moire region. The ROI may be set based on pixels in which a G channel signal is dominant among the R channel signal, G channel signal, and B channel signal. Whether the G channel signal is dominant may be determined based on a difference between a first gradient value of a predetermined pixel location of the temporary G channel data 402 and a second gradient value of a corresponding pixel location of the raw data 401. For example, when the difference is less than a threshold, it may be determined that the G channel signal is dominant at the corresponding pixel location. For example, it may be assumed that the raw data 401 belongs to a first sub image of the sub images. A first gradient value based on an interpolation result using a G channel signal around a first pixel of the first sub image and a second gradient value based on an R channel signal and a B channel signal around the first pixel may be determined. In this example, the interpolation result using a G channel signal may represent the temporary G channel data 402. When a difference between the first gradient value and the second gradient value is less than a threshold, the ROI may be set based on the first pixel.

In operation 460, interpolation based on interference recognition on the temporary G channel data 402 may be performed. Interpolation based on interference recognition may include forward interpolation and cross interpolation. The forward interpolation may be interpolation in the smaller gradient direction, as described in operation 420. The cross interpolation may be interpolation in the vertical direction with respect to the forward interpolation. In other words, the cross interpolation may be interpolation in the greater gradient direction. For example, in the example of the 3*3 grid described above, it may be determined that when V>H, $C_{22}$=V/2 and when V<H, $C_{22}$=H/2. In this example, interpolation may represent refinement through interpolation. Such interpolation may suppress an artifact while maintaining an edge of an ROI, such as a moire region. A result of operation 460 may correspond to final G channel data.

In operation 470, R-G channel data and B-G channel data may be determined through chroma conversion. According to an example, operation 470 may be performed before operation 460 or operation 450. The R-G channel data may be determined by subtracting each pixel value of final R channel data from each pixel value of R channel data extracted from the raw data 401. The B-G channel data may be determined by subtracting each pixel value of final R channel data from each pixel value of R channel data extracted from the raw data 401.

In operation 480, interpolation may be performed on the R-G channel data and the B-G channel data. Interpolation of operation 480 may correspond to interpolation of operations 410 and 420. For the R-G channel data, interpolation in the smaller gradient direction may be performed on pixels other than R-G pixels and for the B-G channel data, interpolation in the smaller gradient direction may be performed on pixels other than B-G pixels. Then, temporary R channel data and temporary B channel data may be determined by adding final R channel data to the R-G channel data and the B-G channel data. The final R channel data and final B channel data may be determined by applying image refinement of operation 490 to the temporary R channel data and the temporary B channel data. The final color data 403 including the final R channel data, the final G channel data, and the final B channel data may correspond to a demosaicing result.

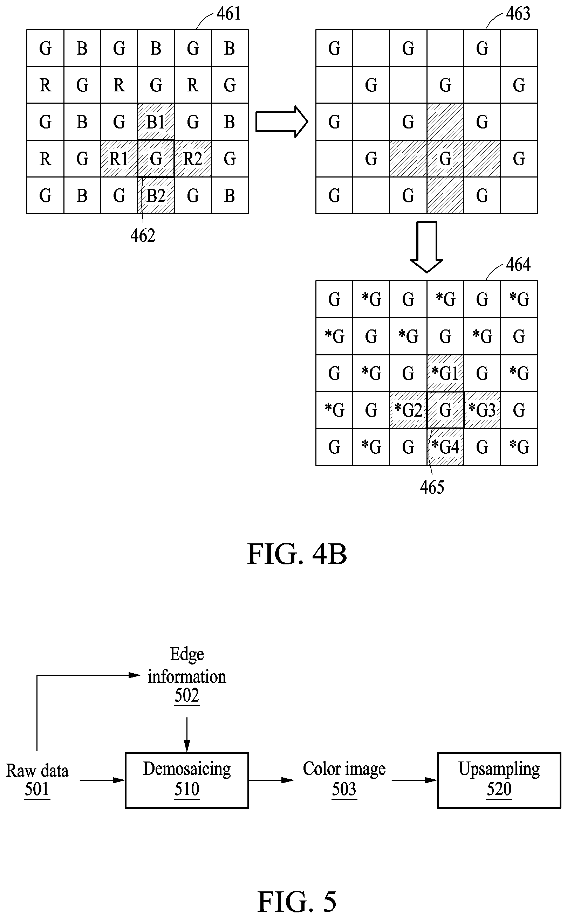

FIG. 4B illustrates an example of an operation of determining a gradient value, according to one or more example embodiments. Referring to FIG. 4B, G channel data 463 may be extracted from raw data 461 including an R channel signal, a G channel signal, and a B channel signal. Temporary G channel data 464 may be determined through gradient-based interpolation (e.g., interpolation of operation 420 of FIG. 4A) on the G channel data 463. In the temporary G channel data 464, a symbol * may be displayed on a pixel generated by interpolation. A first pixel 462 of the raw data 461 may exist at the same location as a second pixel 465 of the temporary R channel data 464. The location may be referred to as a target pixel location.

Whether the target pixel location is included in the ROI may be determined through a comparison between a first gradient value based on interpolation using the temporary R channel data 464 and a second gradient value based on interpolation using the raw data 461. The first gradient value may be determined based on a gradient in the vertical direction using *G1 and *G4 of the temporary R channel data 464 and a gradient in the horizontal direction using *G2 and *G3. For example, a sum of absolute values of two gradient values may be determined to be the first gradient value. The second gradient value may be determined based on a gradient in the vertical direction using B1 and B2 of the raw data 461 and a gradient in the horizontal direction using R1 and R2. For example, a sum of absolute values of two gradient values may be determined to be the second gradient value. When the difference between the first gradient value and the second gradient value is less than a threshold, the ROI may be set such that a target location of a second pixel 465 is included in the ROI. By the same way, it may be determined whether other pixels of the temporary R channel data 464 are included in the ROI.

The example of using the R-G-G-B Bayer pattern as the CFA is described with reference to FIGS. 4A and 4B. According to an example, a different pattern may be used as a CFA. For example, instead of an R-G-G-B arrangement, a different pattern arranged in a first channel signal-a second channel signal-the second channel signal-a third channel signal may be used. In this example, the order of channel signals may correspond to the upper left, upper right, lower left, and lower right of a 2*2 array of the CFA, respectively, For example, an R-C-C-B arrangement, a Cy-Y-Y-M arrangement, and a Cy-Y-Y-R arrangement may be used. In this example, C may denote a clear (C) channel signal, Cy may denote a cyan (Cy) channel signal, Y may denote a yellow (Y) channel signal, and M may denote a magenta (M) channel signal. The second channel signal, which is a dominant color, may be used as G channel data in the Bayer pattern example. For example, when using an R-C-C-B pattern instead of the Bayer pattern, temporary C channel data may be generated in response to a C channel signal and final C channel data may be determined through interference recognition interpolation based on the temporary C channel data. Then, final R channel data and final B channel data may be determined through interpolation on R-C channel data and B-C channel data. Demosaicing in a similar manner may apply to other patterns.

FIG. 5 illustrates an example of an upsampling operation based on edge information, according to one or more example embodiments. Referring to FIG. 5, edge information 502 may be generated based on raw data 501. For example, the edge information 502 may include a gradient value and a Laplacian value. Demosaicing 510 may be performed on the raw data 501 based on the edge information 502 and a color image 503 may be generated based on the demosaicing 510. The edge information 502 may be used for upsampling 520 the color image 503. Through this process, unnecessary redundant operations may be removed and an edge portion may be restored with high resolution.

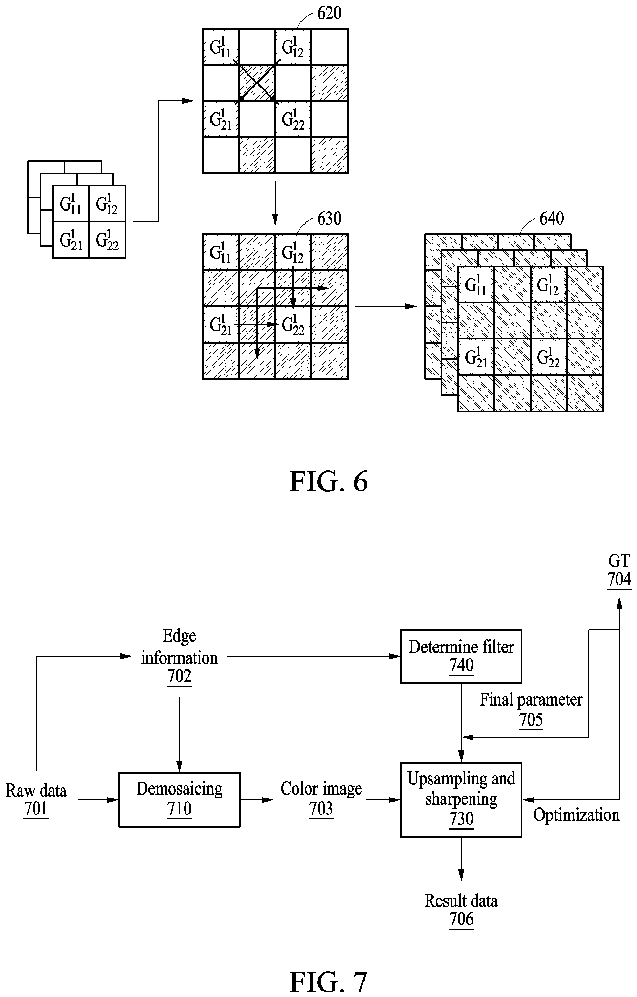

FIG. 6 illustrates an example of a change in pixel data during upsampling, according to one or more example embodiments. Referring to FIG. 6, at least some regions of first intermediate data 620 may be filled through interpolation in the diagonal direction on G channel data and at least some regions of second intermediate data 630 may be filled through interpolation in the vertical and horizontal directions on the first intermediate data 620. In this example, edge information may be used in each interpolation. An upsampling result 640 may be determined by iteratively performing interpolation on the first intermediate data 620 and/or the second intermediate data 630.

FIG. 7 illustrates an example of a sharpening operation according to one or more example embodiments. Referring to FIG. 7, edge information 702 may be generated based on raw data 701, demosaicing 710 may be performed on the raw data 701 based on the edge information 702, and a color image 703 may be generated in response to the demosaicing 710. The edge information 702 may be used for filter determination based on operation 740. For example, a Laplacian filter based on Laplacian values of the edge information 702 may be determined to be a sharpening filter. Of upsampling and sharpening 730, sharpening may be performed using the sharpening filter. The sharpening filter may apply to an upsampling result of the upsampling and sharpening 730 based on a sharpening parameter. The description of FIG. 6 may apply to upsampling of the upsampling of the sharpening 730.

When the sharpening result is derived, the sharpening parameter may be adjusted based on a difference between the sharpening result and a target image. The sharpening parameter may be adjusted to reduce the difference between the sharpening result and the target image. For example, the sharpening parameter may include at least one of the size of a filter kernel, the shape of the filter kernel, and a sharpening amount. The shape of the filter kernel may be determined in operation 740. The target image may correspond to ground truth (GT) 704. When a goal of optimization is fixed to achieving the highest resolution, the GT 704 may be unambiguously determined. For example, the GT 704 may be a chart image for image quality evaluation that is captured through a single lens camera instead of an array lens camera. When the difference between the sharpening result and the target image is less than a threshold through an optimization process, the sharpening parameter may be determined to be a final parameter 705 and result data 706 may be determined based on sharpening based on the final parameter 705. For example, the result data 706 may correspond to the result data 331 and 332 of FIG. 3.

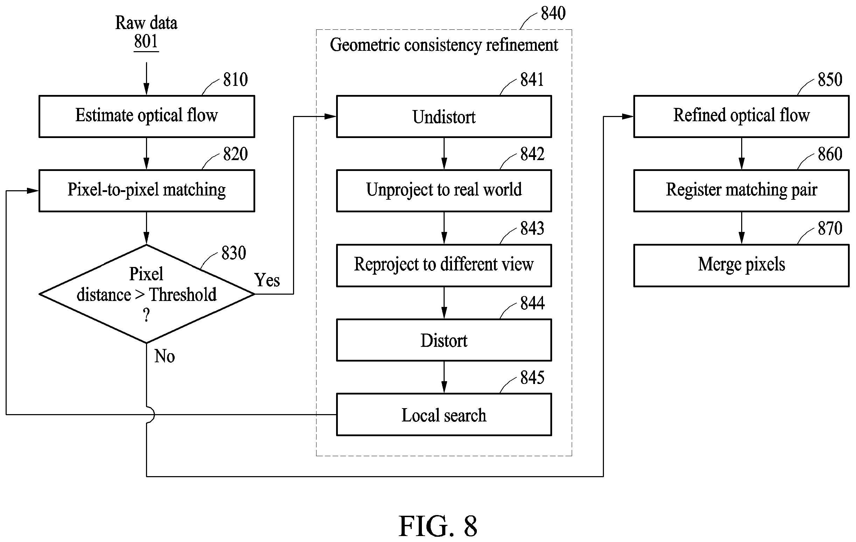

FIG. 8 illustrates an example of a matching information refinement operation using an optical flow, according to one or more example embodiments. Referring to FIG. 8, in operation 810, an optical flow may be estimated using a neural network model. The optical view may include matching information based on a view difference between sub images of pixels. The optical flow may represent a difference between pixel locations based on a view difference rather than a difference between pixel locations based on a movement over time. **In** operation 820, pixel-to-pixel matching may be performed based on the matching information. **In** operation 830, a pixel distance based on the matching result may be compared to a threshold. The pixel distance may represent a distance between target pixels of a matching pair. When a pixel distance of a matching pair is greater than the threshold, the matching pair may be extracted as a refinement target and geometric consistency refinement 840 may be applied to the matching pair.

The geometric consistency refinement 840 may include operations 841 to 845. Hereinafter, an example of the geometric consistency refinement 840 on a first refinement target including a first pixel of a first temporary restored image and a second pixel of a second temporary restored image is described.

**In** operation 841, undistortion may be performed on the first pixel. **In** operation 842, an undistortion result may be unprojected to the real world. The undistortion and unprojection may be performed based on a first calibration parameter. For example, undistortion may be based on a first intrinsic parameter and unprojection may be based on a first extrinsic parameter (e.g., a rotation parameter and a translation parameter). Through operations 841 and 842, a corresponding pixel of the real world corresponding to the first pixel of the first temporary restored image may be determined.

In operation 843, the corresponding pixel may be reprojected to a different view. In operation 844, distortion may be performed on a reprojection result. The reprojection and distortion may be based on a second calibration parameter. For example, reprojection may be based on a second extrinsic parameter (e.g., a rotation parameter and a translation parameter) and distortion may be based on a second intrinsic parameter. Through operations 843 and 844, a temporary pixel of the second temporary restored image corresponding to a corresponding pixel of the real world may be determined.

In operation 845, a local search may be performed based on a location of the temporary pixel in the second temporary image. The matching information may be refined by replacing at least some of target pixels included in the refinement targets based on the local search. Through the local search, for a predetermined range, a search in a predetermined manner may be performed. A new second pixel of the second temporary restored image may be determined through the local search. A matching target of the first pixel of the first refinement target may be updated to the new second pixel.

An array lens camera may be divided into sub camera elements based on involvement of generation of sub images. A calibration parameter may have a different parameter value for a different sub camera element. For example, when a first sub image is generated through a first lens assembly of an array lens assembly and a second sub image is generated through a second lens assembly of the array lens assembly, the first lens assembly and the second lens assembly may be different sub camera elements and different parameter values thereof may be derived. In the example described above, when the first temporary restored image is based on the first sub image, the first calibration parameter, the first intrinsic parameter, and the first extrinsic parameter may be derived for the first lens assembly. When the second temporary restored image is based on the second sub image, the second calibration parameter, the second intrinsic parameter, and the second extrinsic parameter may be derived for the second lens assembly.

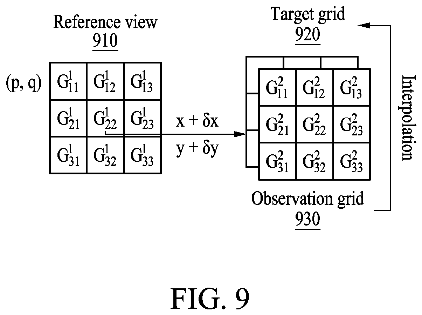

When the geometric consistency refinement 840 is finished, operation 820 may be performed again. The pixel matching of operation 820 and the geometric consistency refinement 840 may be repeated until pixel distances of all matching pairs decrease to be less than a threshold. When the pixel distances of all matching pairs are less than the threshold, a refined optical flow may be determined in operation 850. In this example, refinement may represent the geometric consistency refinement 840. In operation 860, a matching pair based on the refined optical flow may be registered and in operation 870, pixel merging may be performed. A detailed description of pixel merging is provided with reference to FIG. 9.

FIG. 9 illustrates an example of a pixel merging operation based on matching information, according to one or more example embodiments. Referring to FIG. 9, any one of views of sub images may be designated as a reference view 910. Among temporary restored images, a temporary restored image having the reference view 910 may be referred to as a reference image. The temporary restored images may be merged based on the reference image. Each pixel of an output image may be determined based on a weighted sum of each pixel of the other images of the temporary restored images and matching pixels of the remaining images of the temporary restored images. The matching information may be determined by refined matching information. For example, a weighted sum of a first pixel of the reference image and a second pixel of the other image may be determined based on at least one of a first weight based on a difference between an intensity of the first pixel and an intensity of the second pixel, a second weight based on a pixel distance between the first pixel and the second pixel, and a third weight based on whether the first pixel and the second pixel correspond to raw data.

The weighted sum may be performed based on bilateral filtering. The bilateral filtering may include self bilateral filtering and cross bilateral filtering. According to an example, pixel merging may be performed through self bilateral filtering and/or cross bilateral filtering. Based on self bilateral filtering, in one view, a pixel and surrounding pixels may be merged. Self bilateral filtering may be performed through Equations 1 to 4 shown below. Equation 1 shown below may represent a weight based on a pixel intensity difference of the reference view 910. The pixel intensity may represent a pixel value.

[Equation 1]

$$ w^1_{pq\_22} = exp\left( -\frac{\left(G^1_{pq} - G^1_{22}\right)^2}{\sigma^2} \right) $$

In Equation 1, $w^1_{pq\_22}$ may denote a weight based on a pixel intensity difference between $G^1_{pq}$ and $G^1_{22}$, $G^1_{22}$ may denote a pixel intensity of a center pixel, $G^1_{pq}$ may denote a pixel intensity of a neighboring pixel of $G^1_{22}$, and σ may denote a standard deviation. As illustrated in FIG. 9, p and q may have values of 1 to 3, respectively. $G^1_{pq}$ may include $G^1_{22}$. According to Equation 1, as the pixel intensity difference decreases, the weight may increase.

Equation 2 shown below may represent a weight based on a pixel distance of the reference view 910.

[Equation 2]

$$w^1_{d\_22} = exp\left(-\frac{D\left(G^1_{pq} - G^1_{22}\right)^2}{\sigma^2}\right)$$

In Equation 2, $w^1_{d\_22}$ may denote a weight based on a distance between $G^1_{22}$ and $G^1_{pq}$, $D\left(G^1_{pq} - G^1_{22}\right)$ may denote a distance between $G^1_{pq}$ and $G^1_{22}$, and σ may denote a standard deviation. According to Equation 2, as the distance decreases, the weight may increase.

Equation 3 shown below may represent a fusion weight based on a pixel distance and a difference of pixel intensities of the reference view 910.

[Equation 3]

$$w^1_{pq\_d} = w^1_{pq\_22} {}^* w^1_{d\_22}$$

In Equation 3, $w^1_{pq\_d}$ may denote a fusion weight. A neighboring pixel may be selected by (p, q).

Equation 4 shown below may represent a pixel merging result of the reference view 910 based on the fusion weight of the reference view 910.

[Equation 4]

$$G^1_{22=} \frac{\sum_{p,q} G^1_{p,q} * w^1_{pq\_d}}{\sum_{p,q} w^1_{pq\_d}}$$

In Equation 4, $G^1_{22}$ may denote a merged pixel value of the reference view 910, $G^1_{p,q}$ may denote a pixel of the reference view 910 selected by (p, q), and $w^1_{pq\_d}$ may denote a fusion weight of the selected pixel. p and q may have values of 1 to 3, respectively. Through transformation of Equations 1 to 4, a weight and a pixel merging result of other views may be determined.

Based on cross bilateral filtering, each pixel of a predetermined view and a corresponding pixel of a different view may be merged. The corresponding pixel may be determined through matching information. Referring to FIG. 9, G channel data of a temporary restored image of the reference view 910 may be converted into G channel data of an observation grid 930 through the matching information. For example, the reference view 910 may correspond to a first view of a first sub image and the observation grid 930 may correspond to a second view of a second sub image. A pixel (x, y) of the G channel data of the reference view 910 may be converted into a pixel (x+δx, y+δy) of the G channel data of the observation grid 930 through matching information of (δx, δy).

When δx or δy is not an integer, the pixel (x+δx, y+δy) may not match with predetermined coordinates. According to examples, cross bilateral filtering may be performed while assuming a target grid 920 based on integers δx and δy and a difference between the target grid 920 and the observation grid 930 may be covered through interpolation using a weight. Such cross bilateral filtering may be performed through Equations 5 to 8 shown below. Equation 5 shown below may represent a weight based on a pixel intensity difference of the reference view 910 and a second view of the observation grid 930.

[Equation 5]

$$ w_{i\_22}^{1\_2} = exp\left(-\frac{(G_{22}^2 - G_{22}^1)^2}{\sigma^2}\right) $$

In Equation 1, $w_{i\_22}^{1\_2}$ may denote a weight based on a pixel intensity difference between $G_{22}^2$ and $G_{22}^1$, $G_{22}^1$ may denote a pixel intensity of a predetermined pixel of the reference view 910, $G_{22}^2$ may denote a pixel intensity of a corresponding pixel of the second view, and σ may denote a standard deviation. The corresponding pixel may be determined through matching information. According to Equation 5, as the pixel intensity difference decreases, the weight may increase.

Equation 6 shown below may represent a weight based on a pixel distance of the second view of the observation grid 930 and the reference view 910.

[Equation 6]

$$ w_{d\_22}^{1\_2} = exp\left(-\frac{D(G_{22}^2 - G_{22}^1)^2}{\sigma^2}\right) $$

In Equation 6, $w_{d\_22}^{1\_2}$ may denote a weight based on a distance between $G_{22}^2$ and $G_{22}^1$, $D(G_{22}^2 - G_{22}^1)$ may denote a distance between $G_{22}^2$ and $G_{22}^1$, and σ may denote a standard deviation. In cross bilateral filtering, a function D may output a value close to "0" as a distance value decreases and the distance value is close to an integer value obtained by rounding down the distance value. According to Equation 6, as the distance decreases and the distance is close to an integer, the weight may increase.

Equation 7 shown below may represent a fusion weight based on a pixel distance and a pixel intensity difference of the second view of the observation grid 930 and the reference view 910.

[Equation 7]

$$ w_{i\_d}^{1\_2} = w_{i\_22}^{1\_2} {}^* w_{d\_22}^{1\_2} $$

In Equation 7, $w_{i\_d}^{1\_2}$ may denote a fusion weight.

Equation 8 shown below may represent a pixel merging result of the reference view 910 based on the fusion weight.

[Equation 8]

$$G_{22}^{1\_final} = \frac{\sum_i G_i^1 \cdot w_{i\_d}^{1\_i}}{\sum_i w_{i\_d}^{1\_i}}$$

In Equation 4, $G_{22}^{1\_final}$ may denote a merged pixel value of the reference view 910, $G_i^1$ may denote a pixel of each view selected by i, and $w_{i\_d}^{1\_i}$ may denote a fusion weight of the selected pixel. i may denote an identifier of a view. For example, in the case of four sub images, i may have a value of 1 to 4. A fusion weight associated with a third view and a fourth view may be obtained by transforming Equations 5 to 7.

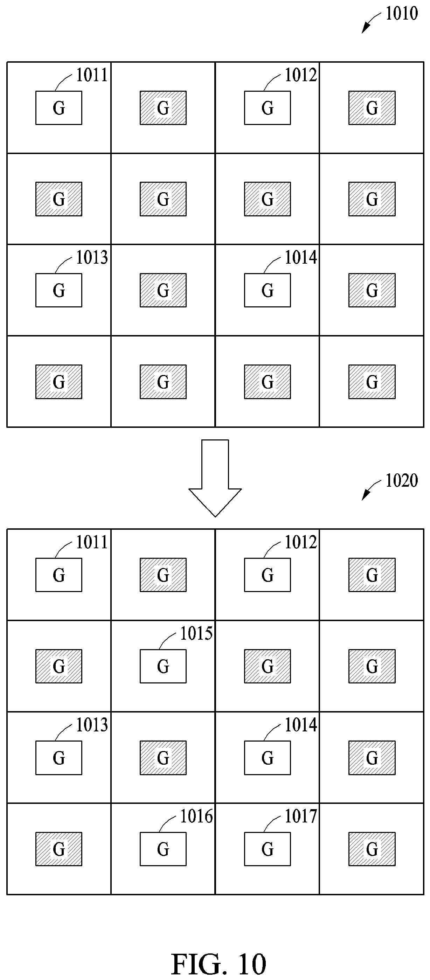

FIG. 10 illustrates an example of a changing process of an original copy of a G channel, according to one or more example embodiments. Referring to FIG. 10, first G channel data 1010 before pixel merging is performed and second G channel data 1020 after pixel merging is performed are illustrated. The first G channel data 1010 and the second G channel data 1020 may correspond to a reference image. The clear G pixels 1011 to 1017 may represent pixels having originality existing from raw data. Other shaded G pixels may represent pixels without originality estimated through interpolation. By comparing the first G channel data 1010 to the second G channel data 1020, these original pixels may exist in each view and thus may be added to the reference image while merging views.

According to examples, a high weight may be assigned to pixels having originality. Equations 9 to 11 shown below may represent fusion weights based on a relationship between the reference view and the other views.

[Equation 9]

$$w_{i\_d}^{1\_2} = w_{i\_22}^{1\_2} * w_{d\_22}^{1\_2}$$

[Equation 10]

$$w_{i\_d}^{1\_3} = w_{i\_22}^{1\_3} * w_{d\_22}^{1\_3}$$

[Equation 11]

$$w_{i\_d}^{1\_4} = w_{i\_22}^{1\_4} * w_{d\_22}^{1\_4}$$

Equation 12 shown below may represent a new fusion weight additionally considering originality to the existing fusion weights of Equations 9 to 11.

[Equation 12]

$$w_{i\_d}^{1\_final} = \sum_i w_{i\_d}^{1\_i} * w_o^i$$

In Equation 12, $w_{i\_d}^{1\_final}$ may denote a new fusion weight and $w_o^i$ may denote a originality weight. $w_o^i$ may represent a higher weight in the case where a target pixel has originality compared to the case where the target pixel does not have originality. When $w_{i\_d}^{1\_final}$ applies to Equation 8 shown above, pixel merging based on the first weight based on the pixel intensity difference, the second weight based on the pixel distance, and the third weight based on the originality may be performed.

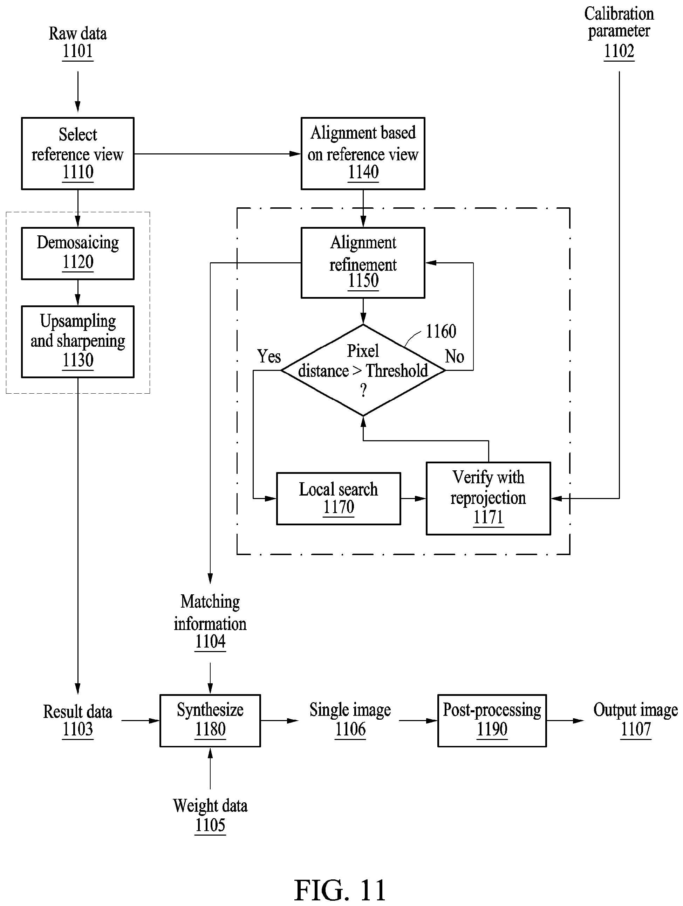

FIG. 11 illustrates an example of an array image processing process according to one or more example embodiments. Referring to FIG. 11, in operation 1110, a reference view may be selected from views of raw data 1101. In operation 1120, demosaicing 1120 based on the raw data 1101 may be performed and in operation 1130, upsampling and sharpening 1130 based on result data of demosaicing 1120 may be performed. Result data 1103 may be determined based on the upsampling and sharpening 1130. Based on upsampling, each image may be enlarged by 4 times (horizontally 2 times and vertically 2 times). Operations 1120 and 1130 may be performed on each view.

In operation 1140, alignment based on the reference view may be performed. Alignment may be performed based on an optical flow using a neural network model. The optical flow may correspond to a dense optical flow. In operation 1150, alignment refinement may be performed. The optical flow may be refined through alignment refinement. In operation 1160, a pixel distance of matching pairs may be compared to a threshold. Based on the comparison result, a refinement target having a pixel distance greater than the threshold may be selected from the matching pairs, in operation 1170, a local search for geometric consistency refinement for the refinement target may be performed, and in operation 1171, a new pixel of the refinement target may be verified through reprojection. A calibration parameter 1102 may be used for reprojection. The geometric consistency refinement may not require iterative image rectification for depth estimation of each array lens camera. Accordingly, explicit geometric warping and correction may be omitted. When pixel distances of all matching pairs are less than the threshold, alignment refinement may be finished and matching information 1104 may be determined.

In operation 1180, a synthesis of result data 1103 may be performed based on the matching information 1104 and weight data 1105. The synthesis may be performed through pixel fusion between each pixel of the reference view of the result data 1103 and corresponding pixels of the other views. As a result of the synthesis, a single image 1106 may be generated. In operation 1190, post-processing, such as deblurring, may be performed on the single image 1106. Deblurring may include optical blur kernel estimation and blur estimation. A neural network model may be used for deblurring. Based on the post-processing, an output image 1107 may be determined. The output image 1107 may correspond to an RGB image or a Bayer image.

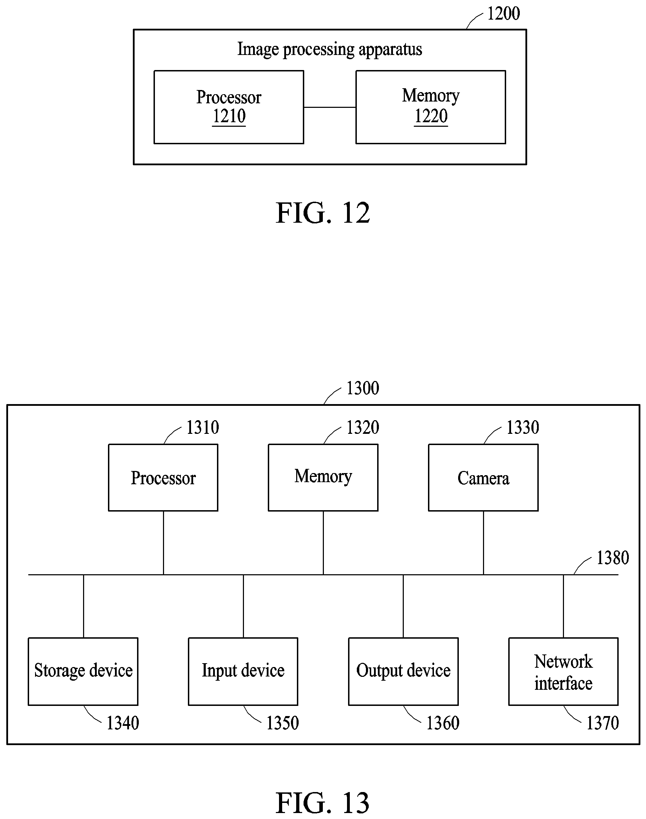

FIG. 12 illustrates a configuration of an image processing apparatus according to another embodiment of the present invention. Referring to FIG. 12, an image processing apparatus 1200 includes a processor 1210 and a memory 1220. The memory 1220 is connected to the processor 1210 and stores instructions executable by the processor 1210, data to be operated by the processor 1210, or data processed by the processor 1210. The memory 1220 includes a non-transitory computer-readable medium (for example, a high-speed random access memory) and/or may include a non-volatile computer-readable medium (for example, at least one disk storage device, a flash memory device, or another non-volatile solid-state memory device).

The processor 1210 executes instructions to perform the operations described herein with reference to FIGS. 1 to 11, FIG. 13, and FIG. 14. The processor 1210 is configured to receive sub images corresponding to different views of an input array image generated through an array lens, generate temporary restored images based on the sub images by using a gradient between neighboring pixels of each of the sub images, determine an optical flow including matching information based on a view difference between the sub images of pixels of the sub images using a neural network model, based on a pixel distance between matching pairs of the pixels of the sub images based on the matching information, extract refinement targets from the matching pairs, refine the matching information by replacing at least some of target pixels included in the refinement targets based on a local search of a region based on pixel locations of the refinement targets, and generate an output image of a single view by merging the temporary restored images based on the refined matching information. In addition, the description provided with reference to FIGS. 1 to 11, FIG. 13, and FIG. 14 may apply to the image processing apparatus 1200.

FIG. 13 illustrates an example of a configuration of an electronic device according to one or more example embodiments. Referring to FIG. 13, an electronic device 1300 may include a processor 1310, a memory 1320, a camera 1330, a storage device 1340, an input device 1350, an output device 1360, and a network interface 1370 that may communicate with each other via a communication bus 1380. For example, the electronic apparatus 1300 may be implemented as at least a portion of, for example, a mobile device such as a mobile phone, a smartphone, a personal digital assistant (PDA), a netbook, a tablet computer, a laptop computer, and the like, a wearable device such as a smart watch, a smart band, smart glasses, and the like, a home appliance such as a television (TV), a smart TV, a refrigerator, and the like, a security device such as a door lock and the like, and a vehicle such as an autonomous vehicle, a smart vehicle, and the like. The electronic device 1300 may structurally and/or functionally include at least a portion of the imaging device 110 of FIGS. 1A and 1B, the image processing apparatus 120 of FIG. 1A, and the image processing apparatus 1200 of FIG. 12.

The processor 1310 executes functions and instructions for execution in the electronic device 1300. For example, the processor 1310 may process instructions stored in the memory 1320 or the storage device 1340. The processor 1310 may perform operations of FIGS. 1 to 12 and FIG. 14. The memory 1320 may include a computer-readable storage medium or a computer-readable storage device. The memory 1320 may store instructions to be executed by the processor 1310 and may store related information while software and/or an application is executed by the electronic device 1300.

The camera 1330 may capture a photo and/or a video. The camera 1330 may include an array lens assembly. For example, the camera 1330 may include the imaging device 110 of FIGS. 1A and 1B. The storage device 1340 may include a computer-readable storage medium or a computer-readable storage device. The storage device 1340 may store more information than the memory 1320 for a long time. For example, the storage device 1340 may include a magnetic hard disk, an optical disc, a flash memory, a floppy disk, or other types of non-volatile memory known in the art.

The input device 1350 may receive an input from the user in traditional input manners through a keyboard and a mouse and in new input manners such as a touch input, a voice input, and an image input. For example, the input device 1350 may include a keyboard, a mouse, a touch screen, a microphone, or any other device that detects the input from the user and transmits the detected input to the electronic device 1300. The output device 1360 may provide an output of the electronic device 1300 to the user through a visual, auditory, or haptic channel. The output device 1360 may include, for example, a display, a touch screen, a speaker, a vibration generator, or any other device that provides the output to the user. The network interface 1370 may communicate with an external device through a wired or wireless network.

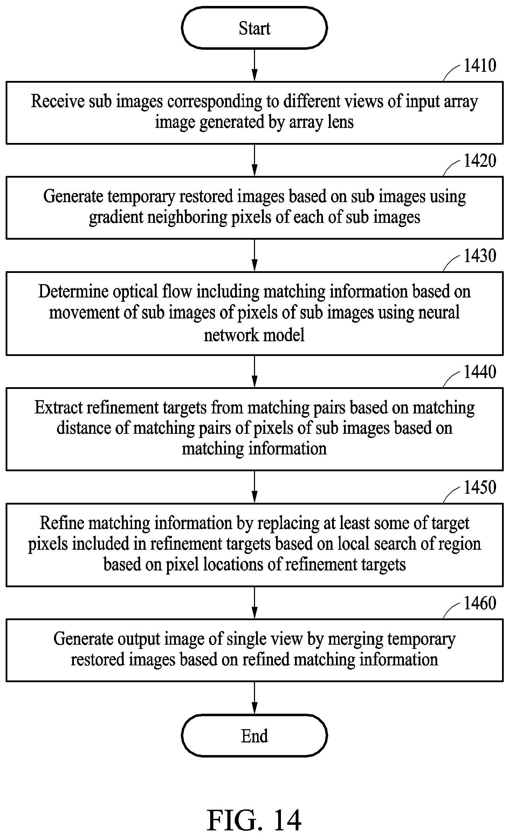

FIG. 14 illustrates an image processing method according to an embodiment of the present invention. Referring to FIG. 14, in operation 1410, an image processing apparatus receives sub images corresponding to different views of an input array image generated through an array lens. In operation 1420, the image processing apparatus generates temporary restored images based on the sub images by using a gradient between neighboring pixels of each of the sub images. In operation 1430, the image processing apparatus determines an optical flow including matching information based on a view difference between the sub images of pixels of the sub images using a neural network model. In operation 1440, based on a pixel distance between matching pairs of the pixels of the sub images based on the matching information, the image processing apparatus extracts refinement targets from the matching pairs. In operation 1450, the image processing apparatus may refine the matching information by replacing at least some of target pixels included in the refinement targets based on a local search of a region based on pixel locations of the refinement targets. In operation 1460, the image processing apparatus generates an output image of a single view by merging the temporary restored images based on the refined matching information.

Each of the sub images of the input array image may iteratively include image data in a 2*2 array type arranged in a first channel signal-a second channel signal-the second channel signal-a third channel signal based on a 2*2 CFA, and operation 1420 may include setting an ROI based on pixels in which the second channel signal is dominant among the first channel signal, the second channel signal, and the third channel signal of the sub images, and based on the gradient between the neighboring pixels of the sub images, performing demosaicing by applying interpolation in a smaller gradient direction to pixels included in the ROI and applying interpolation in a larger gradient direction to pixels not included in the ROI. Here, the interpolation may be applied to a smallest gradient direction to pixels included in the ROI and a largest gradient direction to pixels not included in the ROI. The determining of the ROI may include determining a first gradient value based on an interpolation result by using the second channel signal around a first pixel of a first sub image of the sub images and a second gradient value based on and the third channel signal and the first channel signal around the first pixel, and when a difference between the first gradient value and the second gradient value is less than a threshold, setting the ROI based on the first pixel. The performing of the demosaicing may include performing interpolation in a direction indicating a larger gradient of a vertical direction and a horizontal direction of a first pixel of the ROI, and performing interpolation in a direction indicating a smaller gradient of the vertical direction and the horizontal direction of a second pixel outside the ROI.

According to an example embodiment, operation 1420 may include generating color data by performing demosaicing on raw data of the sub images by using edge information based on the gradient between neighboring pixels of each of the sub images, and generating the temporary restored images based on the sub images by performing upsampling using the edge information. According to an example embodiment, operation 1420 may include determining a sharpening filter using the edge information, applying the sharpening filter to the temporary restored images based on a sharpening parameter, and adjusting the sharpening parameter based on a difference between a sharpening result and a target image.

According to an example embodiment, operation 1440 may include extracting at least some of the matching pairs of which a pixel distance is greater than a threshold as the refinement targets.

According to an example embodiment, operation 1450 may include selecting a first refinement target including a first pixel of a first temporary restored image and a second pixel of a second temporary restored image of the temporary restored images from the refinement targets, determining a corresponding pixel, in a real world, to the first pixel by performing undistortion on the first pixel and reprojection to the real world based on a first calibration parameter, determining a temporary pixel of the second temporary restored image by performing reprojection to the second temporary restored image and distortion on the corresponding pixel based on a second calibration parameter, determining a new second pixel of the second temporary restored image by performing a local search based on a location of the temporary pixel in the second temporary restored image, and updating a matching target of the first pixel to the new second pixel.

According to an example embodiment, operation 1460 may include generating the output image based on a weighted sum of each pixel of a reference image of the temporary restored images and a matching pixel of the other images of the temporary restored images based on the refined matching information. The weighted sum of a first pixel of the reference image and a second pixel of the other images may be determined based on a first weight based on a difference between an intensity of the first pixel and an intensity of the second pixel, a second weight based on a pixel distance between the first pixel and the second pixel, and a third weight based on whether the first pixel and the second pixel correspond to raw data.

In addition, descriptions with reference to FIGS. 1 to 13 may apply to the signal processing method of FIG. 14.

The examples described herein may be implemented using hardware components, software components and/or combinations thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or pseudo equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

A number of example embodiments have been described above. Nevertheless, it should be understood that various modifications may be made to these example embodiments.

Accordingly, other implementations are within the scope of the following claims.

**Claims**

1. An image processing method comprising:

receiving (1410) a plurality of sub images (131, 132, 133, 134) from an input array image (130) generated through an array lens (111), each of the plurality of sub images (131, 132, 133, 134) corresponding to different views;
generating (1420) a plurality of temporary restored images (331, ..., 332) generated by demosaicing the plurality of sub images (131, 132, 133, 134) based on gradients surrounding a pixel position for which a pixel value needs to be determined;
determining (1430) matching information based on an optical flow representing a difference between corresponding pixel locations based on a view difference between pixels of the plurality of sub images (131, 132, 133, 134) using a neural network model; the neural network model being pre-trained to estimate (810) the optical flow including the matching information (340) in response to an input of input data based on a view difference between the sub images (131, 132, 133, 134);
performing a pixel-to-pixel matching (820) based on the matching information and providing a pixel distance representing a distance between pixels of matching pairs of the sub images (131, 132, 133, 134), and comparing (830, 1160) the pixel distance with a threshold;
when the pixel distance of a matching pair is greater than the threshold, extracting (1440) the matching pair as one or more refinement targets;
generating refined matching information by replacing at least one of pixels in the extracted one or more refinement targets based on a local search (845, 1170) for geometric consistency refinement for the refinement targets of a region based on pixel locations of the one or more refinement targets; and
generating (1460) an output image (140, 350) of a single view by merging the plurality of temporary restored images based on the refined matching information.

2. The image processing method of claim 1, wherein each of the plurality of sub images (131, 132, 133, 134) of the input array image (130) iteratively comprises image data in a 2*2 array type arranged in a first channel signal-a second channel signal-the second channel signal-a third channel signal format based on a 2*2 color filter array, CFA, and wherein the generating (1420) the plurality of temporary restored images comprises:

setting (450) a region of interest, ROI, based on first pixels in which the second channel signal is dominant among the first channel signal, the second channel signal, and the third channel signal of the sub images (131, 132, 133, 134); and
based on the gradient between the neighboring pixels of the plurality of sub images (131, 132, 133, 134), performing the demosaicing (510, 710, 1120) by applying interpolation in a first gradient direction to second pixels comprised in the ROI and applying interpolation in a second gradient direction to third pixels not in the ROI, the second gradient direction being different from the first direction.

3. The image processing method of claim 2, wherein the setting of the ROI comprises determining a first gradient value based on an interpolation result using the second channel signal around a first pixel of a first sub image of the plurality of sub images (131, 132, 133, 134) and a second gradient value based on an interpolation result using the third channel signal and the first channel signal around the first pixel, and setting the ROI based on the first pixel based on a difference between the first gradient value and the second gradient value being less than a threshold value, or wherein the performing of the demosaicing comprises performing interpolation in the first gradient direction indicating a smaller gradient of a vertical direction and a horizontal direction of a first pixel of the ROI, and performing interpolation in the second gradient direction indicating a larger gradient of the vertical direction and the horizontal direction of a second pixel outside the ROI.

4. The image processing method of one of claims 1 to 3, wherein the generating of the plurality of temporary restored images comprises:

generating color data by performing the demosaicing on raw data of the plurality of sub images (131, 132, 133, 134) using edge information based on the gradient between the neighboring pixels of each of the plurality of sub images (131, 132, 133, 134); and
generating the plurality of temporary restored images based on the plurality of sub images (131, 132, 133, 134) by performing upsampling using the edge information,
wherein the generating of the plurality of temporary restored images further comprises:

determining a sharpening filter using the edge information;
applying the sharpening filter to the plurality of temporary restored images based on a sharpening parameter; and
adjusting the sharpening parameter based on a difference between a sharpening result and a target image.

5. The image processing method of one of claims 1 to 4, wherein the refining of the matching information comprises:

selecting a first refinement target from the one or more refinement targets, the first refinement target comprising a first pixel of a first temporary restored image and a second pixel of a second temporary restored image from among the plurality of temporary restored images;
determining a corresponding pixel, in a real world, to the first pixel by performing undistortion (841) on the first pixel and reprojection to the real world based on a first calibration parameter;
determining a temporary pixel of the second temporary restored image by performing reprojection (843) to the second temporary restored image and distortion on the corresponding pixel based on a second calibration parameter;
determining a new second pixel of the second temporary restored image by performing the local search (845) based on a location of the temporary pixel in the second temporary restored image; and
updating a matching target of the first pixel to the new second pixel.

6. The image processing method of one of claims 1 to 5, wherein the generating the output image (140, 350) comprises generating the output image (140, 350) based on a weighted sum of each pixel of a reference image of the plurality of temporary restored images and a matching pixel of one or more other images of the temporary restored images based on the refined matching information,
wherein a weighted sum of a first pixel of the reference image and a second pixel of the one or more other images is determined based on a first weight based on a difference between an intensity of the first pixel and an intensity of the second pixel, a second weight based on a pixel distance between the first pixel and the second pixel, and a third weight based on whether the first pixel and the second pixel correspond to raw data.

7. An image processing apparatus comprising:

a memory (1220) configured to store instructions; and
a processor (1210) configured to execute the one or more instructions to:

receive (1410) a plurality of sub images (131, 132, 133, 134) from an input array image (130) generated through an array lens (111), each of the plurality of sub images (131, 132, 133, 134) corresponding to different views;
generate (1420) a plurality of temporary restored images (331, ..., 332) generated by demosaicing the plurality of sub images (131, 132, 133, 134) based on gradients surrounding a pixel position for which a pixel value needs to be determined;
determine (1430) matching information based on an optical flow representing a difference between corresponding pixel locations based on a view difference between pixels of the plurality of sub images (131, 132, 133, 134) using a neural network model; the neural network model being pre-trained to estimate (810) the optical flow including the matching information (340) in response to an input of input data based on a view difference between the sub images (131, 132, 133, 134);
perform a pixel-to-pixel matching (820) based on the matching information and provide a pixel distance representing a distance between pixels of matching pairs of the sub images (131, 132, 133, 134), and compare (830, 1160) the pixel distance with a threshold;
when the pixel distance of a matching pair is greater than the threshold, extract (1440) the matching pair as one or more refinement targets;
generate refined (1450) matching information by replacing at least one of pixels in the extracted one or more refinement targets based on a local search (845, 1170) for geometric consistency refinement for the refinement targets of a region based on pixel locations of the one or more refinement targets; and
generate (1460) an output image (140, 350) of a single view by merging the plurality of temporary restored images based on the refined matching information.

8. The image processing apparatus of claim 7, wherein each of the plurality of sub images (131, 132, 133, 134) of the input array image (130) iteratively comprises image data in a 2*2 array type arranged in a first channel signal-a second channel signal-the second channel signal-a third channel signal format based on a 2*2 color filter array, CFA, and wherein the processor (1210) is further configured to:

set (450) a region of interest, ROI, based on first pixels in which the second channel signal is dominant among the first channel signal, the second channel signal, and the third channel signal of the sub images (131, 132, 133, 134), and
based on the gradient between the neighboring pixels of the plurality of sub images (131, 132, 133, 134), perform the demosaicing (510, 710, 1120) to generate the plurality of temporary restored images by applying interpolation in a first gradient direction to pixels comprised in the ROI and applying interpolation in a second gradient direction to pixels not comprised in the ROI, the second gradient direction being different from the first direction.

9. The image processing apparatus of claim 7 or 8, wherein the processor (1210) is further configured to:

perform interpolation in the first gradient direction indicating a smaller gradient of a vertical direction and a horizontal direction of a first pixel of the ROI; and
perform interpolation in the second gradient direction indicating a larger gradient of the vertical direction and the horizontal direction of a second pixel outside the ROI.

10. The image processing apparatus of one of claims 7 to 9, wherein the processor (1210) is further configured to:

select a first refinement target from the one or more refinement targets, the first refinement target comprising a first pixel of a first temporary restored image and a second pixel of a second temporary restored image from among the plurality of temporary restored images;
determine a corresponding pixel, in a real world, to the first pixel by performing undistortion on the first pixel and reprojection to the real world based on a first calibration parameter,
determine a temporary pixel of the second temporary restored image by performing reprojection to the second temporary restored image and distortion on the corresponding pixel based on a second calibration parameter,
determine a new second pixel of the second temporary restored image by performing a local search based on a location of the temporary pixel in the second temporary restored image, and
update a matching target of the first pixel to the new second pixel.

11. The image processing apparatus of one of claims 7 to 10, wherein the processor (1210) is further configured to generate the output image (140, 350) based on a weighted sum of each pixel of a reference image of the plurality of temporary restored images and a matching pixel of one or more other images of the plurality of temporary restored images based on the refined matching information,
wherein a weighted sum of a first pixel of the reference image and a second pixel of the one or more other images is determined based on a first weight based on a difference between an intensity of the first pixel and an intensity of the second pixel, a second weight based on a pixel distance between the first pixel and the second pixel, and a third weight based on whether the first pixel and the second pixel correspond to raw data.

12. A computer-readable storage medium storing instructions that, when executed by a processor (1310) of an electronic device comprising an imaging device configured to generate an input array image (130) having a plurality of sub images (131, 132, 133, 134), each of the (131, 132, 133, 134) plurality of sub images (131, 132, 133, 134) corresponding to different views, instruct the processor (1310) to:

generate (1420) a plurality of temporary restored images (331, ..., 332) generated by demosaicing the plurality of sub images (131, 132, 133, 134) based on gradients surrounding a pixel position for which a pixel value needs to be determined;
determine (1430) matching information based on an optical flow representing a difference between corresponding pixel locations based on a view difference between pixels of the plurality of sub images (131, 132, 133, 134) using a neural network model; the neural network model being pre-trained to estimate (810) the optical flow including the matching information (340) in response to an input of input data based on a view difference between the sub images (131, 132, 133, 134);
perform a pixel-to-pixel matching (820) based on the matching information and provide a pixel distance representing a distance between pixels of matching pairs of the sub images (131, 132, 133, 134), and compare (830, 1160) the pixel distance with a threshold;
when the pixel distance of a matching pair is greater than the threshold, extract (1440) the matching pair as one or more refinement targets;
generate refined (1450) matching information by replacing at least one of pixels in the extracted one or more refinement targets based on a local search (845, 1170) for geometric consistency refinement for the refinement targets of a region based on pixel locations of the one or more refinement targets; and generate (1460) an output image (140, 350) of a single view by merging the plurality of temporary restored images based on the refined matching information.

13. The computer-readable storage medium of claim 12, wherein each of the plurality of sub images (131, 132, 133, 134) of the input array image (130) iteratively comprises image data in a 2*2 array type arranged in a first channel signal-a second channel signal-the second channel signal-a third channel signal format based on a 2*2 color filter array, CFA, and

wherein the processor (1310) is further instructed to:

set (450) a region of interest, ROI based on first pixels in which the second channel signal is dominant among the first channel signal, the second channel signal, and the third channel signal of the sub images (131, 132, 133, 134), and

based on the gradient between the neighboring pixels of the plurality of sub images (131, 132, 133, 134), perform the demosaicing to generate the plurality of temporary restored images by applying interpolation in a first gradient direction to pixels comprised in the ROI and applying interpolation in a second gradient direction to pixels not comprised in the ROI, the second gradient direction being different from the first direction.

**Patentansprüche**

1. Bildverarbeitungsverfahren, mit:

Empfangen (1410) mehrerer Teilbilder (131, 132, 133, 134) aus einem Eingangs-Array-Bild (130), das durch eine Array-Linse (111) erzeugt wurde, wobei jedes der mehreren Teilbilder (131, 132, 133, 134) einer unterschiedlichen Ansicht entspricht;
Erzeugen (1420) mehrerer temporärer rekonstruierter Bilder (331, 332), die durch Durchführen einer Demosaikbildung der mehreren Teilbilder (131, 132, 133, 134) auf der Grundlage von Gradienten erzeugt werden, die eine Pixelposition umgeben, für die ein Pixelwert zu bestimmen ist;
Bestimmen (1430) von Übereinstimmungsinformationen auf der Grundlage eines optischen Flusses, der eine Differenz zwischen entsprechenden Pixelpositionen auf der Grundlage einer Ansichtsdifferenz zwischen Pixeln der mehreren Teilbilder (131, 132, 133, 134) darstellt, unter Verwendung eines neuronalen Netzwerkmodells; wobei das neuronale Netzwerkmodell vortrainiert ist, um den optischen Fluss einschließlich der Übereinstimmungsinformationen (340) als Reaktion auf eine Eingabe von Eingabedaten auf der Grundlage einer Ansichtendifferenz zwischen den Teilbildern (131, 132, 133, 134) zu schätzen (810);
Durchführen eines Pixel-zu-Pixel-Abgleichs (820) auf der Grundlage der Übereinstimmungsinformationen und Bereitstellen eines Pixelabstands, der einen Abstand zwischen Pixeln von Abgleichpaaren der Teilbilder (131, 132, 133, 134) darstellt, sowie Vergleichen (830, 1160) des Pixelabstands mit einem Schwellenwert;
wenn der Pixelabstand eines Abgleichpaares größer als der Schwellenwert ist, Extrahieren (1440) des Abgleichpaares als ein oder mehrere Verfeinerungsziele;
Erzeugen verfeinerter Übereinstimmungsinformationen durch Ersetzen mindestens eines der Pixel in dem extrahierten einen oder mehreren Verfeinerungszielen auf der Grundlage einer lokalen Suche (845, 1170) nach geometrischer Konsistenzverfeinerung für die Verfeinerungsziele eines Bereichs auf der Grundlage von Pixelpositionen des einen oder der mehreren Verfeinerungsziele; und
Erzeugen (1460) eines Ausgabebildes (140, 350) einer einzelnen Ansicht durch Zusammenführen der mehreren vorübergehend wiederhergestellten Bildern auf der Grundlage der verfeinerten Übereinstimmungsinformationen.

2. Bildverarbeitungsverfahren nach Anspruch 1, wobei jedes der mehreren Teilbilder (131, 132, 133, 134) des Eingangs-Array-Bildes (130) iterativ Bilddaten in einem $2\times2$-Array-Typ umfasst, die in einem Format aus einem ersten Kanalsignal - einem zweiten Kanalsignal - dem zweiten Kanalsignal - einem dritten Kanalsignal auf der Grundlage eines $2\times2$-Farbfilterarrays (CFA) angeordnet sind, und
wobei das Erzeugen (1420) der mehreren vorübergehend wiederhergestellten Bilder umfasst:

Festlegen (450) einer interessierenden Region, ROI, auf der Grundlage von ersten Pixeln, bei denen das zweite Kanalsignal aus dem ersten Kanalsignal, dem zweiten Kanalsignal und dem dritten Kanalsignal der Teilbilder (131, 132, 133, 134) dominiert; und

auf der Grundlage des Gradienten zwischen benachbarten Pixeln der mehreren Teilbilder (131, 132, 133, 134) eine Demosakbildung (510, 710, 1120) durchzuführen, indem Interpolation in einer ersten Gradientenrichtung auf zweite Pixel, die in der ROI enthalten sind, und Interpolation in einer zweiten Gradientenrichtung auf dritte Pixel, die nicht in der ROI enthalten sind, angewendet wird, wobei sich die zweite Gradientenrichtung von der ersten Richtung unterscheidet.

3. Bildverarbeitungsverfahren nach Anspruch 2, wobei das Festlegen der ROI umfasst: Bestimmen eines ersten Gradientenwerts auf der Grundlage eines Interpolationsergebnisses unter Verwendung des zweiten Kanalsignals um ein erstes Pixel eines ersten Teilbildes der mehreren Teilbilder (131, 132, 133, 134) und eines zweiten Gradientenwerts auf der Grundlage eines Interpolationsergebnisses unter Verwendung des dritten Kanalsignals und des ersten Kanalsignals um das erste Pixel herum, sowie Festlegen der ROI auf der Grundlage des ersten Pixels, basierend darauf, dass eine Differenz zwischen dem ersten Gradientenwert und dem zweiten Gradientenwert kleiner als ein Schwellenwert ist, oder
wobei das Durchführen der Demosaikbildung umfasst: Durchführen einer Interpolation in der ersten Gradientenrichtung, die einen geringeren Gradienten in vertikaler Richtung und horizontaler Richtung eines ersten Pixels der ROI anzeigt, und das Durchführen einer Interpolation in der zweiten Gradientenrichtung, die einen größeren Gradienten in vertikaler Richtung und horizontaler Richtung eines zweiten Pixels außerhalb der ROI anzeigt.

4. Bildverarbeitungsverfahren nach einem der Ansprüche 1 bis 3, wobei das Erzeugen der mehreren vorübergehend wiederhergestellten Bildern umfasst:

Erzeugen von Farbdaten durch Ausführen der Demosaikbildung an Rohdaten der mehreren Teilbilder (131, 132, 133, 134) unter Verwendung von Kanteninformationen, die auf dem Gradienten zwischen den benachbarten Pixeln jedes der mehreren Teilbilder (131, 132, 133, 134) beruhen; und
Erzeugen der mehreren vorübergehend wiederhergestellten Bilder auf der Grundlage der mehreren Teilbilder (131, 132, 133, 134) durch Ausführen eines Upsamplings unter Verwendung der Kanteninformationen,
wobei das Erzeugen der mehreren vorübergehend wiederhergestellten Bilder ferner umfasst:

Bestimmen eines Schärfungsfilters unter Verwendung der Kanteninformationen;
Anwenden des Schärfungsfilters auf die mehreren vorübergehend wiederhergestellten Bildern auf der Grundlage eines Schärfungsparameters; und
Anpassen des Schärfungsparameters auf der Grundlage einer Differenz zwischen einem Schärfungsergebnis und einem Zielbild.

5. Bildverarbeitungsverfahren nach einem der Ansprüche 1 bis 4, wobei die Verfeinerung der Übereinstimmungsinformationen umfasst:

Auswählen eines ersten Verfeinerungsziels aus dem einen oder den mehreren Verfeinerungszielen, wobei das erste Verfeinerungsziel ein erstes Pixel eines ersten vorübergehend wiederhergestellten Bildes und ein zweites Pixel eines zweiten vorübergehend wiederhergestellten Bildes aus den mehreren vorübergehend wiederhergestellter Bildern umfasst;
Bestimmen eines dem ersten Pixel in der realen Welt entsprechenden Pixels durch Ausführen einer Entzerrung (841) des ersten Pixels und einer Rückprojektion in die reale Welt auf der Grundlage eines ersten Kalibrierungsparameters;
Bestimmen eines temporären Pixels des zweiten temporär wiederhergestellten Bildes durch Ausführen einer Rückprojektion (843) auf das zweite temporär wiederhergestellte Bild und einer Verzerrung des entsprechenden Pixels auf der Grundlage eines zweiten Kalibrierungsparameters;
Bestimmen eines neuen zweiten Pixels des zweiten vorübergehend wiederhergestellten Bildes durch Ausführen der lokalen Suche (845) auf der Grundlage einer Position des temporären Pixels in dem zweiten vorübergehend wiederhergestellten Bild; und
Aktualisieren eines Abgleichziels des ersten Pixels auf das neue zweite Pixel.

6. Bildverarbeitungsverfahren nach einem der Ansprüche 1 bis 5, wobei das Erzeugen des Ausgabebildes (140, 350) Erzeugen des Ausgabebildes (140, 350) auf der Grundlage einer gewichteten Summe jedes Pixels eines Referenzbildes aus den mehreren vorübergehend wiederhergestellten Bildern und eines übereinstimmenden Pixels eines oder mehrerer anderer Bilder der vorübergehend wiederhergestellten Bilder auf der Grundlage der verfeinerten Übereinstimmungsinformationen umfasst,
wobei eine gewichtete Summe eines ersten Pixels des Referenzbildes und eines zweiten Pixels des einen oder der mehreren anderen Bilder bestimmt wird auf der Grundlage eines ersten Gewichts, das auf einer Differenz zwischen einer Intensität des ersten Pixels und einer Intensität des zweiten Pixels basiert, eines zweiten Gewichts, das auf einem Pixelabstand zwischen dem ersten Pixel und dem zweiten Pixel basiert, und eines dritten Gewichts, das darauf basiert, ob das erste Pixel und das zweite Pixel Rohdaten entsprechen.

7. Bildverarbeitungsvorrichtung, mit:

einem Speicher (1220), der zum Speichern von Befehlen konfiguriert ist; und
einem Prozessor (1210), der zum Ausführen des einen oder der mehreren Befehle konfiguriert ist, um:

mehrere Teilbilder (131, 132, 133, 134) aus einem Eingangs-Array-Bild (130) zu empfangen, das durch eine Array-Linse (111) erzeugt wurde, wobei jedes der mehreren Teilbilder (131, 132, 133, 134) einer unterschiedlichen Ansicht entspricht;
mehrere temporäre rekonstruierte Bilder (331, 332) zu erzeugen (1420), die durch Durchführung einer Demosakbildung der mehreren Teilbilder (131, 132, 133, 134) auf der Grundlage von Gradienten um eine Pixelposition herum erzeugt werden, für die ein Pixelwert zu bestimmen ist;
Übereinstimmungsinformationen auf der Grundlage eines optischen Flusses zu ermitteln (1430), der eine Differenz zwischen entsprechenden Pixelpositionen auf der Grundlage einer Ansichtsdifferenz zwischen Pixeln der mehreren Teilbilder (131, 132, 133, 134) darstellt, unter Verwendung eines neuronalen Netzwerkmodells; wobei das neuronale Netzwerkmodell vortrainiert ist, um den optischen Fluss einschließlich der Übereinstimmungsinformationen (340) als Reaktion auf eine Eingabe von Eingabedaten auf der Grundlage eines Ansichtendifferenz zwischen den Teilbildern (131, 132, 133, 134) zu schätzen (810);
einen Pixel-zu-Pixel-Abgleich (820) auf der Grundlage der Übereinstimmungsinformationen durchzuführen und einen Pixelabstand bereitzustellen, der einen Abstand zwischen Pixeln von Abgleichpaaren der Teilbilder (131, 132, 133, 134) darstellt, sowie den Pixelabstand mit einem Schwellenwert zu vergleichen (830, 1160);
wenn der Pixelabstand eines Abgleichpaares größer als der Schwellenwert ist, das Abgleichpaar als ein oder mehrere Verfeinerungsziele zu extrahieren (1440);
verfeinerte Übereinstimmungsinformationen zu erzeugen (1450) durch Ersetzen mindestens eines der Pixel in dem extrahierten einen oder mehreren Verfeinerungszielen auf der Grundlage einer lokalen Suche (845, 1170) nach geometrischer Konsistenzverfeinerung für die Verfeinerungsziele eines Bereichs auf der Grundlage von Pixelpositionen des einen oder der mehreren Verfeinerungsziele; und
ein Ausgabebild (140, 350) einer einzelnen Ansicht zu erzeugen (1460) durch Zusammenführen der mehreren vorübergehend wiederhergestellten Bilder auf der Grundlage der verfeinerten Übereinstimmungsinformationen.

8. Bildverarbeitungsvorrichtung nach Anspruch 7, wobei jedes der mehreren Teilbilder (131, 132, 133, 134) des Eingang-Aarray-Bildes (130) iterativ Bilddaten in einem 2×2-Array-Typ umfasst, die in einem Format "erstes Kanalsignal - zweites Kanalsignal - zweites Kanalsignal - drittes Kanalsignal" angeordnet sind, basierend auf einem 2×2-Farbfilterarray (CFA), und
wobei der Prozessor (1210) ferner ausgebildet ist zum:

Festlegen (450) einer interessierenden Region, ROI, auf der Grundlage von ersten Pixeln, bei denen das zweite Kanalsignal aus dem ersten Kanalsignal, dem zweiten Kanalsignal und dem dritten Kanalsignal der Teilbilder (131, 132, 133, 134) dominiert, und
auf der Grundlage des Gradienten zwischen benachbarten Pixeln der mehreren Teilbilder (131, 132, 133, 134) Durchführen einer Demosaikbildung (510, 710, 1120), um die mehreren vorübergehend wiederhergestellten Bildern zu erzeugen, indem eine Interpolation in einer ersten Gradientenrichtung auf Pixel angewendet wird, die in der ROI enthalten sind, und eine Interpolation in einer zweiten Gradientenrichtung auf Pixel angewendet wird, die nicht in der ROI enthalten sind, wobei sich die zweite Gradientenrichtung von der ersten Richtung unterscheidet.

9. Bildverarbeitungsvorrichtung nach Anspruch 7 oder 8, wobei der Prozessor (1210) ferner ausgebildet ist zum:

Durchführen einer Interpolation in der ersten Gradientenrichtung, die einen geringeren Gradienten der vertikalen Richtung und der horizontalen Richtung eines ersten Pixels der ROI angibt; und
Durchführen einer Interpolation in der zweiten Gradientenrichtung, die einen größeren Gradienten der vertikalen Richtung und der horizontalen Richtung eines zweiten Pixels außerhalb der ROI angibt.

**10.** Bildverarbeitungsvorrichtung nach einem der Ansprüche 7 bis 9, wobei der Prozessor (1210) ferner ausgebildet ist zum:

Auswählen eines ersten Verfeinerungsziels aus dem einen oder den mehreren Verfeinerungszielen, wobei das erste Verfeinerungsziel ein erstes Pixel eines ersten vorübergehend wiederhergestellten Bildes und ein zweites Pixel eines zweiten vorübergehend wiederhergestellten Bildes aus den mehreren vorübergehend wiederhergestellten Bildern umfasst;

Bestimmen eines dem ersten Pixel entsprechenden Pixels in der realen Welt, indem eine Entzerrung des ersten Pixels und eine Rückprojektion in die reale Welt auf der Grundlage eines ersten Kalibrierungsparameters durchgeführt werden,

Bestimmen eines temporären Pixels des zweiten temporär wiederhergestellten Bildes, indem eine Rückprojektion auf das zweite temporär wiederhergestellte Bild und eine Verzerrung des entsprechenden Pixels auf der Grundlage eines zweiten Kalibrierungsparameters durchgeführt werden,

Bestimmen eines neuen zweiten Pixels des zweiten temporär wiederhergestellten Bildes, indem eine lokale Suche auf der Grundlage einer Position des temporären Pixels in dem zweiten temporär wiederhergestellten Bild durchgeführt wird, und

Aktualisieren eines Zuordnungsziels des ersten Pixels auf das neue zweite Pixel.

**11.** Bildverarbeitungsvorrichtung nach einem der Ansprüche 7 bis 10, wobei der Prozessor (1210) ferner ausgebildet ist, das Ausgabebild (140, 350) auf der Grundlage einer gewichteten Summe jedes Pixels eines Referenzbildes aus den mehreren vorübergehend wiederhergestellten Bildern und eines entsprechenden Pixels eines oder mehrerer anderer Bilder aus den mehreren vorübergehend wiederhergestellten Bildern auf der Grundlage der verfeinerten Übereinstimmungsinformationen zu erzeugen,

wobei eine gewichtete Summe eines ersten Pixels des Referenzbildes und eines zweiten Pixels des einen oder der mehreren anderen Bilder bestimmt wird auf der Grundlage eines ersten Gewichts, das auf einer Differenz zwischen einer Intensität des ersten Pixels und einer Intensität des zweiten Pixels basiert, eines zweiten Gewichts, das auf einem Pixelabstand zwischen dem ersten Pixel und dem zweiten Pixel basiert, und eines dritten Gewichts, das darauf basiert, ob das erste Pixel und das zweite Pixel Rohdaten entsprechen.

**12.** Computerlesbares Speichermedium, das Anweisungen speichert, die, wenn sie von einem Prozessor (1310) eines elektronischen Geräts ausgeführt werden, das eine Bildgebungsvorrichtung aufweist, die ausgebildet ist, ein Eingangs-Array-Bild (130) mit mehreren Teilbildern (131, 132, 133, 134) zu erzeugen, wobei jedes der mehreren Teilbilder (131, 132, 133, 134) einer unterschiedlichen Ansicht entspricht, den Prozessor (1310) anweisen zum:

Erzeugen (1420) mehrerer temporärer rekonstruierte Bilder (331, 332), die durch Durchführen einer Demosaikbildung der mehreren Teilbilder (131, 132, 133, 134) auf der Grundlage von Gradienten um eine Pixelposition herum erzeugt werden, für die ein Pixelwert zu bestimmen ist;

Ermitteln (1430) von Übereinstimmungsinformationen auf der Grundlage eines optischen Flusses, der eine Differenz zwischen entsprechenden Pixelpositionen auf der Grundlage einer Ansichtsdifferenz zwischen Pixeln der mehreren Teilbilder (131, 132, 133, 134) darstellt, unter Verwendung eines neuronalen Netzwerkmodells; wobei das neuronale Netzwerkmodell vortrainiert ist, um den optischen Fluss einschließlich der Übereinstimmungsinformationen (340) als Reaktion auf eine Eingabe von Eingabedaten auf der Grundlage einer Ansichtendifferenz zwischen den Teilbildern (131, 132, 133, 134) zu schätzen (810);

Durchführen eines Pixel-zu-Pixel-Abgleichs (820) auf der Grundlage der Übereinstimmungsinformationen und Bereitstellung eines Pixelabstands, der einen Abstand zwischen Pixeln von Abgleichpaaren der Teilbilder (131, 132, 133, 134) darstellt, sowie Vergleichen (830, 1160) des Pixelabstands mit einem Schwellenwert;

wenn der Pixelabstand eines Abgleichpaares größer als der Schwellenwert ist, Extrahieren (1440) des Abgleichpaares als ein oder mehrere Verfeinerungsziele;

Erzeugen (1450) verfeinerter Übereinstimmungsinformationen durch Ersetzen mindestens eines der Pixel in dem extrahierten einen oder mehreren Verfeinerungszielen auf der Grundlage einer lokalen Suche (845, 1170) nach geometrischer Konsistenzverfeinerung für die Verfeinerungsziele eines Bereichs auf der Grundlage von Pixelpositionen des einen oder der mehreren Verfeinerungsziele; und

Erzeugen (1460) eines Ausgabebildes (140, 350) einer einzelnen Ansicht durch Zusammenführen der mehreren vorübergehend wiederhergestellten Bilder auf der Grundlage der verfeinerten Übereinstimmungsinformationen.

**13.** Computerlesbares Speichermedium nach Anspruch 12, wobei jedes der mehreren Teilbilder (131, 132, 133, 134) des Eingangs-Array-Bildes (130) iterativ Bilddaten in einem $2\times2$-Array-Typ umfasst, die in einem Format "erstes Kanalsignal - ein zweites Kanalsignal - das zweite Kanalsignal - ein drittes Kanalsignal" basierend auf einem 2×2-Farbfilterarray (CFA) angeordnet sind, und

wobei der Prozessor (1310) ferner angewiesen wird,
eine interessierende Region, ROI, auf der Grundlage von ersten Pixeln festzulegen (450), in denen das zweite Kanalsignal aus dem ersten Kanalsignal, dem zweiten Kanalsignal und dem dritten Kanalsignal der Teilbilder (131, 132, 133, 134) dominiert, und
auf der Grundlage des Gradienten zwischen benachbarten Pixeln der mehreren Teilbilder (131, 132, 133, 134) die Demosaikbildung durchzuführen, um die mehreren vorübergehend wiederhergestellten Bilder zu erzeugen, indem Interpolation in einer ersten Gradientenrichtung auf Pixel angewendet wird, die in der ROI enthalten sind, und Interpolation in einer zweiten Gradientenrichtung auf Pixel angewendet wird, die nicht in der ROI enthalten sind, wobei sich die zweite Gradientenrichtung von der ersten Richtung unterscheidet.

## Revendications

1. Procédé de traitement d'image comprenant les étapes consistant à :

recevoir (1410) une pluralité de sous-images (131, 132, 133, 134) à partir d'une image matricielle d'entrée (130) générée au moyen d'une lentille matricielle (111), chacune de la pluralité de sous-images (131, 132, 133, 134) correspondant à des vues différentes ;
générer (1420) une pluralité d'images restaurées temporaires (331, ..., 332) générées par démosaïquage de la pluralité de sous-images (131, 132, 133, 134) sur la base de gradients entourant une position de pixel pour laquelle une valeur de pixel doit être déterminée ;
déterminer (1430) des informations de mise en correspondance sur la base d'un flux optique représentant une différence entre des emplacements de pixel correspondants sur la base d'une différence de vue entre des pixels de la pluralité de sous-images (131, 132, 133, 134) à l'aide d'un modèle de réseau neuronal ; le modèle de réseau neuronal étant pré-entraîné pour estimer (810) le flux optique comportant les informations de mise en correspondance (340) en réponse à une entrée de données d'entrée basée sur une différence de vue entre les sous-images (131, 132, 133, 134) ; effectuer une mise en correspondance pixel-pixel (820) sur la base des informations de mise en correspondance et fournir une distance de pixels représentant une distance entre des pixels de paires mises en correspondance des sous-images (131, 132, 133, 134), et comparer (830, 1160) la distance de pixels à un seuil ;
lorsque la distance de pixels d'une paire mise en correspondance est supérieure au seuil, extraire (1440) la paire mise en correspondance en tant qu'une ou plusieurs cibles d'épuration ;
générer des informations de mise en correspondance épurées en remplaçant au moins un des pixels dans les une ou plusieurs cibles d'épuration extraites sur la base d'une recherche locale (845, 1170) pour épurement de cohérence géométrique pour les cibles d'épuration d'une région sur la base d'emplacements de pixel des une ou plusieurs cibles d'épuration ; et
générer (1460) une image de sortie (140, 350) d'une vue unique en fusionnant la pluralité d'images restaurées temporaires sur la base des informations de mise en correspondance épurées.

2. Procédé de traitement d'image selon la revendication 1, dans lequel chacune de la pluralité de sous-images (131, 132, 133, 134) de l'image matricielle d'entrée (130) comprend itérativement des données d'image dans un type de matrice 2*2 agencées selon un format signal de premier canal - signal de deuxième canal - signal de deuxième canal - signal de troisième canal sur la base d'une matrice 2*2 de filtres colorés, CFA, et
dans lequel la génération (1420) de la pluralité d'images restaurées temporaires comprend :

l'établissement (450) d'une région d'intérêt, ROI, sur la base de premiers pixels dans laquelle le signal de deuxième canal est dominant parmi le signal de premier canal, le signal de deuxième canal et le signal de troisième canal des sous-images (131, 132, 133, 134) ; et
sur la base du gradient entre les pixels voisins de la pluralité de sous-images (131, 132, 133, 134), la réalisation du démosaïquage (510, 710, 1120) en appliquant une interpolation dans une première direction de gradient à des deuxièmes pixels compris dans la ROI et en appliquant une interpolation dans une seconde direction de gradient à des troisièmes pixels non présents dans la ROI, la seconde direction de gradient étant différente de la première direction.

3. Procédé de traitement d'image selon la revendication 2, dans lequel l'établissement de la ROI comprend la détermination d'une première valeur de gradient sur la base d'un résultat d'interpolation utilisant le signal de deuxième canal autour d'un premier pixel d'une première sous-image de la pluralité de sous-images (131, 132, 133, 134) et d'une seconde valeur de gradient sur la base d'un résultat d'interpolation utilisant le signal de troisième canal et le signal de premier canal autour du premier pixel, et l'établissement de la ROI sur la base du premier pixel sur la base d'une différence entre la première valeur de gradient et la seconde valeur de gradient qui est inférieure à une valeur seuil, ou

dans lequel la réalisation du démosaïquage comprend la réalisation d'une interpolation dans la première direction de gradient indiquant un gradient plus petit d'une direction verticale et d'une direction horizontale d'un premier pixel de la ROI, et la réalisation d'une interpolation dans la seconde direction de gradient indiquant un gradient plus grand de la direction verticale et de la direction horizontale d'un deuxième pixel hors de la ROI.

4. Procédé de traitement d'image selon l'une quelconque des revendications 1 à 3, dans lequel la génération de la pluralité d'images restaurées temporaires comprend :

la génération de données de couleur en effectuant le démosaïquage sur des données brutes de la pluralité de sous-images (131, 132, 133, 134) en utilisant des informations de bord sur la base du gradient entre les pixels voisins de chacune de la pluralité de sous-images (131, 132, 133, 134) ; et
la génération de la pluralité d'images restaurées temporaires sur la base de la pluralité de sous-images (131, 132, 133, 134) en effectuant un suréchantillonnage en utilisant les informations de bord,
dans lequel la génération de la pluralité d'images restaurées temporaires comprend en outre :

la détermination d'un filtre d'accentuation en utilisant les informations de bord ;
l'application du filtre d'accentuation à la pluralité d'images restaurées temporaires sur la base d'un paramètre d'accentuation ; et
l'ajustement du paramètre d'accentuation sur la base d'une différence entre un résultat d'accentuation et une image cible.

5. Procédé de traitement d'image selon l'une des revendications 1 à 4, dans lequel l'épuration des informations de mise en correspondance comprend :

la sélection d'une première cible d'épuration parmi les une ou plusieurs cibles d'épuration, la première cible d'épuration comprenant un premier pixel d'une première image restaurée temporaire et un deuxième pixel d'une seconde image restaurée temporaire parmi la pluralité d'images restaurées temporaires ;
la détermination d'un pixel correspondant, dans le monde réel, au premier pixel en effectuant une correction de distorsion (841) sur le premier pixel et une reprojection vers le monde réel sur la base d'un premier paramètre d'étalonnage ;
la détermination d'un pixel temporaire de la seconde image restaurée temporaire en effectuant une reprojection (843) vers la seconde image restaurée temporaire et une distorsion sur le pixel correspondant sur la base d'un second paramètre d'étalonnage ;
la détermination d'un nouveau deuxième pixel de la seconde image restaurée temporaire en effectuant la recherche locale (845) sur la base d'un emplacement du pixel temporaire dans la seconde image restaurée temporaire ; et
la mise à jour d'une cible de mise en correspondance du premier pixel vers le nouveau deuxième pixel.

6. Procédé de traitement d'image selon l'une des revendications 1 à 5, dans lequel la génération de l'image de sortie (140, 350) comprend la génération de l'image de sortie (140, 350) sur la base d'une somme pondérée de chaque pixel d'une image de référence parmi la pluralité d'images restaurées temporaires et d'un pixel mis en correspondance d'une ou plusieurs autres images parmi les images restaurées temporaires sur la base des informations de mise en correspondance épurées,
dans lequel une somme pondérée d'un premier pixel de l'image de référence et d'un deuxième pixel des une ou plusieurs autres images est déterminée sur la base d'un premier poids basé sur une différence entre une intensité du premier pixel et une intensité du deuxième pixel, d'un deuxièmes poids basé sur une distance de pixels entre le premier pixel et le deuxième pixel, et d'un troisième poids basé sur le fait que le premier pixel et le deuxième pixel correspondent à des données brutes.

7. Appareil de traitement d'image comprenant :

une mémoire (1220) configurée pour stocker des instructions ; et
un processeur (1210) configuré pour exécuter les une ou plusieurs instructions pour :

recevoir (1410) une pluralité de sous-images (131, 132, 133, 134) à partir d'une image matricielle d'entrée (130) générée au moyen d'une lentille matricielle (111), chacune de la pluralité de sous-images (131, 132, 133, 134) correspondant à des vues différentes ;

générer (1420) une pluralité d'images restaurées temporaires (331, ..., 332) générées par démosaïquage de la pluralité de sous-images (131, 132, 133, 134) sur la base de gradients entourant une position de pixel pour laquelle une valeur de pixel doit être déterminée ;

déterminer (1430) des informations de mise en correspondance sur la base d'un flux optique représentant une différence entre des emplacements de pixel correspondants sur la base d'une différence de vue entre des pixels de la pluralité de sous-images (131, 132, 133, 134) à l'aide d'un modèle de réseau neuronal ; le modèle de réseau neuronal étant pré-entraîné pour estimer (810) le flux optique comportant les informations de mise en correspondance (340) en réponse à une entrée de données d'entrée basée sur une différence de vue entre les sous-images (131, 132, 133, 134) ;

effectuer une mise en correspondance pixel-pixel (820) sur la base des informations de mise en correspondance et fournir une distance de pixels représentant une distance entre des pixels de paires mises en correspondance des sous-images (131, 132, 133, 134), et comparer (830, 1160) la distance de pixels à un seuil ;

lorsque la distance de pixels d'une paire mise en correspondance est supérieure au seuil, extraire (1440) la paire mise en correspondance en tant qu'une ou plusieurs cibles d'épuration ;

générer (1450) des informations de mise en correspondance épurées en remplaçant au moins un des pixels dans les une ou plusieurs cibles d'épuration extraites sur la base d'une recherche locale (845, 1170) pour épuration de cohérence géométrique pour les cibles d'épuration d'une région sur la base d'emplacements de pixel des une ou plusieurs cibles d'épuration ; et

générer (1460) une image de sortie (140, 350) d'une vue unique en fusionnant la pluralité d'images restaurées temporaires sur la base des informations de mise en correspondance épurées.

8. Appareil de traitement d'image selon la revendication 7, dans lequel chacune de la pluralité de sous-images (131, 132, 133, 134) de l'image matricielle d'entrée (130) comprend itérativement des données d'image dans un type de matrice 2*2 agencées selon un format signal de premier canal - signal de deuxième canal - signal de deuxième canal - signal de troisième canal sur la base d'une matrice 2*2 de filtres colorés, CFA, et

dans lequel le processeur (1210) est en outre configuré pour :

établir (450) une région d'intérêt, ROI, sur la base de premiers pixels dans laquelle le signal de deuxième canal est dominant parmi le signal de premier canal, le signal de deuxième canal et le signal de troisième canal des sous-images (131, 132, 133, 134) ; et

sur la base du gradient entre les pixels voisins de la pluralité de sous-images (131, 132, 133, 134), réaliser le démosaïquage (510, 710, 1120) pour générer la pluralité d'images restaurées temporaires en appliquant une interpolation dans une première direction de gradient à des pixels compris dans la ROI et en appliquant une interpolation dans une seconde direction de gradient à des pixels non compris dans la ROI, la seconde direction de gradient étant différente de la première direction.

9. Appareil de traitement d'image selon la revendication 7 ou 8, dans lequel le processeur (1210) est en outre configuré pour :

effectuer une interpolation dans la première direction de gradient indiquant un gradient plus petit d'une direction verticale et d'une direction horizontale d'un premier pixel de la ROI ; et

effectuer une interpolation dans la seconde direction de gradient indiquant un gradient plus grand de la direction verticale et de la direction horizontale d'un deuxième pixel hors de la ROI.

10. Appareil de traitement d'image selon l'une des revendications 7 à 9, dans lequel le processeur (1210) est en outre configuré pour :

sélectionner une première cible d'épuration parmi les une ou plusieurs cibles d'épuration, la première cible d'épuration comprenant un premier pixel d'une première image restaurée temporaire et un deuxième pixel d'une seconde image restaurée temporaire parmi la pluralité d'images restaurées temporaires ;

déterminer un pixel correspondant, dans le monde réel, au premier pixel en effectuant une correction de distorsion sur le premier pixel et une reprojection vers le monde réel sur la base d'un premier paramètre d'étalonnage ;

déterminer un pixel temporaire de la seconde image restaurée temporaire en effectuant une reprojection vers la seconde image restaurée temporaire et une distorsion sur le pixel correspondant sur la base d'un second paramètre d'étalonnage ;

déterminer un nouveau deuxième pixel de la seconde image restaurée temporaire en effectuant une recherche locale sur la base d'un emplacement du pixel temporaire dans la seconde image restaurée temporaire ; et

mettre à jour une cible de mise en correspondance du premier pixel vers le nouveau deuxième pixel.

11. Appareil de traitement d'image selon l'une des revendications 7 à 10, dans lequel le processeur (1210) est en outre configuré pour générer l'image de sortie (140, 350) sur la base d'une somme pondérée de chaque pixel d'une image de référence parmi la pluralité d'images restaurées temporaires et d'un pixel mis en correspondance d'une ou plusieurs autres images parmi la pluralité d'images restaurées temporaires sur la base des informations de mise en correspondance épurées,

dans lequel une somme pondérée d'un premier pixel de l'image de référence et d'un deuxième pixel des une ou plusieurs autres images est déterminée sur la base d'un premier poids basé sur une différence entre une intensité du premier pixel et une intensité du deuxième pixel, d'un deuxièmes poids basé sur une distance de pixels entre le premier pixel et le deuxième pixel, et d'un troisième poids basé sur le fait que le premier pixel et le deuxième pixel correspondent à des données brutes.

12. Support de stockage lisible par ordinateur stockant des instructions qui, lorsqu'elles sont exécutées par un processeur (1310) d'un dispositif électronique comprenant un dispositif d'imagerie configuré pour générer une image matricielle d'entrée (130) ayant une pluralité de sous-images (131, 132, 133, 134), chacune de la pluralité de sous-images (131, 132, 133, 134) correspondant à des vues différentes, ordonnent au processeur (1310) de :

générer (1420) une pluralité d'images restaurées temporaires (331, ..., 332) générées par démosaïquage de la pluralité de sous-images (131, 132, 133, 134) sur la base de gradients entourant une position de pixel pour laquelle une valeur de pixel doit être déterminée ;

déterminer (1430) des informations de mise en correspondance sur la base d'un flux optique représentant une différence entre des emplacements de pixel correspondants sur la base d'une différence de vue entre des pixels de la pluralité de sous-images (131, 132, 133, 134) à l'aide d'un modèle de réseau neuronal ; le modèle de réseau neuronal étant pré-entraîné pour estimer (810) le flux optique comportant les informations de mise en correspondance (340) en réponse à une entrée de données d'entrée basée sur une différence de vue entre les sous-images (131, 132, 133, 134) ;

effectuer une mise en correspondance pixel-pixel (820) sur la base des informations de mise en correspondance et fournir une distance de pixels représentant une distance entre des pixels de paires mises en correspondance des sous-images (131, 132, 133, 134), et comparer (830, 1160) la distance de pixels à un seuil ;

lorsque la distance de pixels d'une paire mise en correspondance est supérieure au seuil, extraire (1440) la paire mise en correspondance en tant qu'une ou plusieurs cibles d'épuration ;

générer (1450) des informations de mise en correspondance épurées en remplaçant au moins un des pixels dans les une ou plusieurs cibles d'épuration extraites sur la base d'une recherche locale (845, 1170) pour épurement de cohérence géométrique pour les cibles d'épuration d'une région sur la base d'emplacements de pixel des une ou plusieurs cibles d'épuration ; et

générer (1460) une image de sortie (140, 350) d'une vue unique en fusionnant la pluralité d'images restaurées temporaires sur la base des informations de mise en correspondance épurées.

13. Support de stockage lisible par ordinateur selon la revendication 12, dans lequel chacune de la pluralité de sous-images (131, 132, 133, 134) de l'image matricielle d'entrée (130) comprend itérativement des données d'image dans un type de matrice 2*2 agencées selon un format signal de premier canal - signal de deuxième canal - signal de deuxième canal - signal de troisième canal sur la base d'une matrice 2*2 de filtres colorés, CFA, et

dans lequel le processeur (1310) reçoit en outre l'instruction de :

établir (450) une région d'intérêt, ROI, sur la base de premiers pixels dans laquelle le signal de deuxième canal est dominant parmi le signal de premier canal, le signal de deuxième canal et le signal de troisième canal des sous-images (131, 132, 133, 134) ; et

sur la base du gradient entre les pixels voisins de la pluralité de sous-images (131, 132, 133, 134), réaliser le démosaïquage pour générer la pluralité d'images restaurées temporaires en appliquant une interpolation dans une première direction de gradient à des pixels compris dans la ROI et en appliquant une interpolation dans une seconde direction de gradient à des pixels non compris dans la ROI, la seconde direction de gradient étant différente de la première direction.

110

Imaging device

Array lens assembly
111

Image sensor
112

Imaging processing
apparatus
120

130

Input array image

| First sub image 131 | Second sub image 132 |
|---|---|
| Third sub image 133 | Fourth sub image 134 |

Output image
140

FIG. 1A

FIG. 1B

FIG. 2

EP 4 343 678 B1

Raw data $\xrightarrow{\text{Demosaicing}}$ Result data $\xrightarrow{\text{Upsampling}}$ Result data

311

| $G_{11}^{i1}$ | $B_{12}^{i1}$ |
| $R_{21}^{i1}$ | $G_{22}^{i1}$ |

321

| $R_{11}^1$ | $R_{12}^1$ |
| $R_{21}^1$ | $B_{11}^1$ | $B_{12}^1$ |
| | $B_{21}^1$ | $G_{11}^1$ | $G_{12}^1$ |
| | | $G_{21}^1$ | $G_{22}^1$ |

331

| $G^1$ | $G^1$ | $G^1$ | $G^1$ |
| $G^1$ | $G^1$ | $G^1$ | $G^1$ |
| $G^1$ | $G^1$ | $G^1$ | $G^1$ |
| $G^1$ | $G^1$ | $G^1$ | $G^1$ |

312

| $G_{11}^{i2}$ | $B_{12}^{i2}$ |
| $R_{21}^{i2}$ | $G_{22}^{i2}$ |

322

| $R_{11}^2$ | $R_{12}^2$ |
| $R_{21}^2$ | $B_{11}^2$ | $B_{12}^2$ |
| | $B_{21}^2$ | $G_{11}^2$ | $G_{12}^2$ |
| | | $G_{21}^2$ | $G_{22}^2$ |

Matching information 340

313

| $G_{11}^{i3}$ | $B_{12}^{i3}$ |
| $R_{21}^{i3}$ | $G_{22}^{i3}$ |

323

| $R_{11}^{i3}$ | $R_{12}^{i3}$ |
| $R_{21}^{i3}$ | $B_{11}^{i3}$ | $B_{12}^{i3}$ |
| | $B_{21}^{i3}$ | $G_{11}^{i3}$ | $G_{12}^{i3}$ |
| | | $G_{21}^{i3}$ | $G_{22}^{i3}$ |

Merge $\rightarrow$ Output image 350

314

| $G_{11}^{i4}$ | $B_{12}^{i4}$ |
| $R_{21}^{i4}$ | $G_{22}^{i4}$ |

324

| $R_{11}^{i4}$ | $R_{12}^{i4}$ |
| $R_{21}^{i4}$ | $B_{11}^{i4}$ | $B_{12}^{i4}$ |
| | $B_{21}^{i4}$ | $G_{11}^{i4}$ | $G_{12}^{i4}$ |
| | | $G_{21}^{i4}$ | $G_{22}^{i4}$ |

332

| $G^4$ | $G^4$ | $G^4$ | $G^4$ |
| $G^4$ | $G^4$ | $G^4$ | $G^4$ |
| $G^4$ | $G^4$ | $G^4$ | $G^4$ |
| $G^4$ | $G^4$ | $G^4$ | $G^4$ |

FIG. 3

| G | B | G |
|---|---|---|
| R | G | R |
| G | B | G |

401

Determine gradient 410

Interpolation based on gradient 420

Determine edge 430

| G | G | G |
|---|---|---|
| G | G | G |
| G | G | G |

402

Interpolation based on interference recognition 460

Set ROI 450

Refine image 440

Chroma conversion 470

R-G, B-G interpolation 480

Refine image 490

| G | G | G |
|---|---|---|
| G | G | G |
| G | G | G |

403

FIG. 4A

## FIG. 4B

Grid 461:

| G | B | G | B | G | B |
|---|---|---|---|---|---|
| R | G | R | G | R | G |
| G | B | G | B1 | G | B |
| R | G | R1 | G | R2 | G |
| G | B | G | B2 | G | B |

462

Grid 463:

| G |   | G |   | G |   |
|---|---|---|---|---|---|
|   | G |   | G |   | G |
| G |   | G |   | G |   |
|   | G |   | G |   | G |
| G |   | G |   | G |   |

Grid 464:

| G | *G | G | *G | G | *G |
|---|---|---|---|---|---|
| *G | G | *G | G | *G | G |
| G | *G | G | *G1 | G | *G |
| *G | G | *G2 | G | *G3 | G |
| G | *G | G | *G4 | G | *G |

465

## FIG. 5

Edge information 502

Raw data 501 → Demosaicing 510 → Color image 503 → Upsampling 520

## FIG. 5

FIG. 6

FIG. 7

FIG. 8

FIG. 9

FIG. 10

Raw data
1101

Calibration
parameter
1102

Select
reference view
1110

Alignment based
on reference view
1140

Demosaicing
1120

Alignment
refinement
1150

Upsampling
and sharpening
1130

1160

Yes

Pixel
distance > Threshold
?

No

Local search
1170

Verify with
reprojection
1171

Matching
information
1104

Result data
1103

Synthesize
1180

Single image
1106

Post-processing
1190

Output image
1107

Weight data
1105

FIG. 11

1200

Image processing apparatus

Processor
1210

Memory
1220

## FIG. 12

1300

1310

Processor

1320

Memory

1330

Camera

1380

Storage device

1340

Input device

1350

Output device

1360

Network
interface

1370

## FIG. 13

```
              ┌─────────────┐
              │    Start    │
              └──────┬──────┘
                     │                            ╱ 1410
      ┌──────────────▼───────────────────────────────────┐
      │ Receive sub images corresponding to different views of input array │
      │           image generated by array lens          │
      └──────────────┬───────────────────────────────────┘
                     │                            ╱ 1420
      ┌──────────────▼───────────────────────────────────┐
      │ Generate temporary restored images based on sub images using │
      │        gradient neighboring pixels of each of sub images     │
      └──────────────┬───────────────────────────────────┘
                     │                            ╱ 1430
      ┌──────────────▼───────────────────────────────────┐
      │ Determine optical flow including matching information based on │
      │ movement of sub images of pixels of sub images using neural │
      │                    network model                  │
      └──────────────┬───────────────────────────────────┘
                     │                            ╱ 1440
      ┌──────────────▼───────────────────────────────────┐
      │ Extract refinement targets from matching pairs based on matching │
      │    distance of matching pairs of pixels of sub images based on │
      │                  matching information             │
      └──────────────┬───────────────────────────────────┘
                     │                            ╱ 1450
      ┌──────────────▼───────────────────────────────────┐
      │ Refine matching information by replacing at least some of target │
      │ pixels included in refinement targets based on local search of region │
      │          based on pixel locations of refinement targets │
      └──────────────┬───────────────────────────────────┘
                     │                            ╱ 1460
      ┌──────────────▼───────────────────────────────────┐
      │ Generate output image of single view by merging temporary │
      │    restored images based on refined matching information │
      └──────────────┬───────────────────────────────────┘
                     │
              ┌──────▼──────┐
              │     End     │
              └─────────────┘
```

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4050553 A1
- WO 2008086037 A2
- US 2014055632 A1